(19) **Europäisches Patentamt / European Patent Office / Office européen des brevets**

(11) **EP 1 804 398 B1**

(12) **EUROPEAN PATENT SPECIFICATION**

(45) Date of publication and mention
of the grant of the patent:
**15.08.2012 Bulletin 2012/33**

(51) Int Cl.:
***H04W 76/04*** *(2009.01)*

(21) Application number: **04822363.0**

(22) Date of filing: **05.11.2004**

(86) International application number:
**PCT/JP2004/016446**

(87) International publication number:
**WO 2006/048941 (11.05.2006 Gazette 2006/19)**

(54) **MOBILE COMMUNICATION TERMINAL APPARATUS, CONTROL METHOD THEREOF, COMMUNICATION SYSTEM, AND LOAMING METHOD THEREOF**

MOBILES KOMMUNIKATIONSENDGERÄT, ZUGEHÖRIGES KONTROLLVERFAHREN, KOMMUNIKATIONSSYSTEM UND ZUGEHÖRIGES ROAMING-VERFAHREN

APPAREIL TERMINAL DE COMMUNICATION MOBILE, MÉTHODE DE COMMANDE DE CELUI-CI, SYSTÈME DE COMMUNICATION ET MÉTHODE DE RECHERCHE POUR CELUI-CI

(84) Designated Contracting States:
**DE FR GB**

(43) Date of publication of application:
**04.07.2007 Bulletin 2007/27**

(60) Divisional application:
**11176605.1 / 2 385 740**

(73) Proprietor: **Panasonic Corporation
Kadoma-shi
Osaka 571-8501 (JP)**

(72) Inventors:
• **NG, Chan Wah,
Panasonic Singapore Lab. Pte.Ltd.
Industrial Estate Singapore 534415 (SG)**

• **CHENG, Hong,
Panasonic Singapore Lab. Pte.Ltd.
Industrial Estate Singapore 534415 (SG)**
• **TAN, Pek, Yew.,
Panasonic Singapore Lab. Pte.Ltd.
Industrial Estate Singapore 534415 (SG)**
• **KOH, Benjamin, T.M.,
Panasonic Singapore Lab. Pte.Ltd.
Industrial Estate Singapore 534415 (SG)**

(74) Representative: **Grünecker, Kinkeldey,
Stockmair & Schwanhäusser
Leopoldstrasse 4
80802 München (DE)**

(56) References cited:
EP-A1- 1 385 351      EP-B1- 0 980 190
WO-A1-02/076131      JP-A- 11 168 410
JP-A- 2002 199 426      JP-A- 2003 125 433

**Description**

Technical Field

The present invention relates to a mobile communications terminal apparatus which is operable in a plurality of packet switched data communications networks and changes its point of attachment for joining in the network, in other words, does roaming among the networks. Specifically, the present invention relates to a mobile communications terminal apparatus which has a plurality of network access mechanisms for joining in a plurality of networks, where such a plurality of network access mechanisms are controlled in a unified manner to conform to the protocols of the networks.

In addition, the present invention is applicable to dual wireless access technologies such as IEEE (Institute of Electrical and Electronics Engineers) 802.11 and W-CDMA (Wide-Band Code Division Multiple Access).

Moreover, the present invention aims to extend the operable area of a mobile communications terminal apparatus, which is made possible by providing a mobile communications terminal apparatus and a control method thereof which controls network access mechanisms in a unified manner to ensure conformity to the protocols of the networks.

Background Art

With the emergence and evolution of wireless technology, an increasing number of mobile communications terminals capable of joining in the global network in the Internet, and so on, are seen nowadays.

These mobile communication terminal apparatuses roam through different domains and establish channels with base stations in different packet switched communications networks sequentially. Such a roaming provisioning is fairly matured in a circuit switched communications network, such as a GSM (Global Systems for Mobile Communications) system.

In a packet switched data communications network, however, the adoption of such roaming capabilities is difficult. This is because communication terminal apparatuses in a packet switched data communications network uses addresses each of which is unique to each terminal apparatus in the network. Incidentally, such unique addresses usually contain portions (usually the prefix) that must be valid in a spatial topology.

In Patent Document 1, Valentine et. al. attempted to incorporate packet switched data communications into circuit switched electric telecommunications network. However, an issue of how addresses are allocated to the data communications terminal apparatuses is unspecified in Patent Document 1.

To provide a solution to such address allocation problem, it is described in Patent Document 2 that addresses are dynamically allocated to mobile terminal apparatuses at the time of set-up time. According to the technique described in Patent Document 2, it seems as though the problem of address allocation were able to be solved. However, there is no specific mention in Patent Document 2 as to how an old address is associated with a new address at the time when the mobile terminal apparatus moves, thereby leaving its former point of attachment to another point of attachment for joining in another electric telecommunications network. Incidentally, it is desirable for a mobile terminal apparatus to be able to receive packets at the same address continuously even after a plurality of changes of point of attachment to packet switched data communications networks. This allows smooth continuation of communication sessions even when the mobile communication terminal apparatus changes its point of attachment to the packet switched data communications network.

To support such roaming capabilities, a technique related to Mobile IPv4 is described in Non-Patent Document 1, while a technique related to Mobile IPv6 is described in Non-Patent Document 2. In Mobile IP, each data communications terminal apparatus called as a mobile node has a permanent home domain. When a mobile node joins in a home network, which includes its home domain, the mobile node is assigned a permanent global address known as a home-address. When the mobile node is away from the home network, and attached to some other foreign networks, the mobile node is usually assigned a temporary global address known as a "care-of-address." Using the care-of-address, the mobile node is able to receive packets addressed to its home-address even when the mobile node is attached to other foreign networks . Incidentally, a router called as a home agent is necessary on a home network for using a care-of-address. A mobile node registers its care-of-address with a home agent using a message known as "Binding Update." The home agent intercepts messages that are addressed to the mobile node's home-address, and forwards the messages to the mobile node's care-of-address. Even which kinds of foreign networks other than the home network the mobile node is attached to, as long as the mobile node has provided the home agent with information on the association between the home address and the care-of-address, the mobile node is able to receive packets addressed to the home address at any time.

However, according to the techniques described in Non-Patent Documents 1 and 2, it is necessary to allocate a time period for preparation of a new association between a home address and a new care-of-address (including a time necessary to acquire the new care-of-address) after a mobile node has left its former point of attachment. Accordingly, it is not possible for the mobile node to receive packets during such a preparation time period.

To address such an issue, a technique for achieving a fast handoff from a previous base station with which a mobile communications terminal apparatus has held a channel to a new base station with which a mobile communications terminal apparatus is going to establish a new channel has been developed as described in Patent Document 3. In addition, a technique for making a determination as to whether handoff procedures must be followed, where such a determination is made by measuring the speed of a mobile communications terminal apparatus with respect to a plurality of base stations, is described in Patent Document 4. Though these techniques might reduce the overhead of handoff, there is still some time period which is necessary for switching over from an old care-of-address to a new care-of-address. For that reason, it is still not possible to achieve a completely seamless handoff even if the above-cited techniques are employed. Moreover, such techniques require the dynamic providing of an association between the home address and the care-of-address of a mobile communications terminal apparatus to base stations, which in turn increases burden on the base stations' signal processing loads. Furthermore, such techniques depend on the base stations' capabilities and functionalities to actually perform each handoff procedure, which further makes the constitution of the base station apparatuses more complex, and makes the base station apparatuses more expensive.

As a technical medium to achieve such a fast handoff, it is possible to conceive the deployment of a plurality of network access mechanisms. A mobile communications terminal apparatus provided with a plurality of network access mechanisms is able to achieve a fast and seamless handoff by assigning a network access mechanism to a previous base station with which the terminal apparatus held a channel and assigning a different network access mechanism to a new base station with which the terminal apparatus is now going to establish a channel.

However, in order to use such a plurality of network access mechanisms, it is necessary for network interfaces which are provided in the mobile communications terminal apparatus to provide triggers to controlling software which dominantly controls the mobile communication terminal apparatus.

Patent Document 1: United States Patent No.6504839.
Patent Document 2: United States Patent No.6469998.
Patent Document 3: United States Patent No.6473413.
Patent Document 4: United States Patent No.5913168.
Non-patent Document 1: Perkins, C. E. et. al., "IP Mobility Support", IETF RCF 3344, Aug. 2002.
Non-patent Document 2: Johnson, et. al., (Johnson, D.B., Perkins, C. E., andArkko, J., "Mobility Support in IPv6", Internet Draft: draft-ietf-mobileip-ipv6-21.txt, Work In Progress, Feb. 2003.
Non-patent Document 3: Haykin, S., Adaptive Filter Theory, Prentice-Hall, Upper Saddle River, New Jersey, Third Edition, 1996.
Non-patent Document 4: Kalman, R.E., "A New Approach to Linear Filtering and Prediction Problems", Trans. ASME, vol. 82, series D, pp. 35 - 45, March 1960.
Non-patent Document 5: Haykin, S., Neural Network: A Comprehensive Foundation, Prentice Hall, Upper Saddle River, New Jersey, International Edition, 1994.

EP 0 980 190 B1 relates to multi-mode telecommunication device that is capable of making a comparison between supported communication systems, network offered systems and the subscriber profile, before the mobile terminal registers at a network. The telecommunication device comprises control means for determining network capability in terms of available modes of operation as well as the corresponding link quality of each frequency band and radio channel. Subsequently, the results are compared with subscription profiles and user preferences that are required for deciding which operation mode, frequency band etc. shall be used for attempting to register in a network. Only after the operation mode and frequency band selection procedure is completed, the communication device attempts to register to the network according to appropriate specifications.

WO 02/076131 A1 relates to a user equipment for enabling a user to access one of a plurality of radio communications networks. The user equipment comprises at memory for storing network identification data of each of the plurality of networks as well as for storing data relevant to user preferences. Upon detecting at least one of the plurality of radio communications networks, the received signal characteristics are compared with identification data stored in the memory. One of the detected and identified networks is chosen by comparing same with user preferences. Then, a communications channel with the chosen network is set up.

EP 1 385 351 A1 relates to a mobile device that is capable of accessing a number of networks. A plurality of network configurations are stored in the mobile device. The device selects one of the network configurations and logs onto one of the networks corresponding to the selected network configuration, thereby performing an access to the network.

Disclosure of Invention

Problems to be Solved by the Invention

As described above, in a situation where a mobile communications terminal apparatus roams among packet switched data communications networks, it is difficult to achieve a smooth handoff with seamless communications session by using existing solutions. More specifically, when the mobile communications terminal apparatus is newly attached to a different domain, in other words, establishes a new channel with a new base station different from the previous base station, it is necessary to have a preparation time period before the new care-of-address becomes serviceable, and during such a preparation time period, certain packets addressed to the mobile communications terminal apparatus might end up being undelivered.

With the evolution of wireless technologies, many mobile terminals now are able to take advantage of a plurality of different access technologies, such as IEEE 802. 11b and GPRS (General Packet Radio Service) . To take that advantage, a mobile communications terminal apparatus may use such different access technologies alternately, thereby achieving a fast handoff.

However, in order to achieve such a fast handoff, it is necessary for network access mechanisms which are provided in the mobile communications terminal apparatus to provide a certain number of triggers to a controlling layer which dominantly controls the network access mechanisms. In addition theses triggers should have a uniform format so as to ease the complexity of the controlling layer and to reduce the load of signal processing done therein.

It is therefore an object of the present invention is to provide a mobile communications terminal apparatus and a control method thereof which achieves, in a situation where the mobile communications terminal apparatus roams among a plurality of packet switched data communications networks, a smooth and seamless handoff.

Means for Solving the Problem

A mobile communications terminal apparatus according to the present invention has a constitution for roaming among a plurality of packet switched data communications networks, mobile communications terminal apparatus having: a Network Access Unit (NAU) having a network access mechanism uniquely set by adjusting each specification of hardware, software, and protocol; and a Multiple Access Decision Unit (MADU) that decides a channel to be used in communications session by exchanging information with the NAU by using one set of interfaces, and controls the NAU associated with the decided channel.

A mobile communications terminal apparatus according to the present invention, in the above-described invention, has a constitution in which the one set of interfaces used by the MADU includes a Query Interface, a Configure Interface, and a Trigger Interface, where the Query Interface comprises a portion for identification of a query type (Query-Code) and another portion containing a buffer for storing a query result (Query-Result) and is a signal transmitted from the MADU to the NAU for getting information on the NAU, and the Configure Interface comprises a portion for indicating a parameter to be configured (Parameter-Code) and another portion for storing a new value of the parameter (Parameter-Value) and is a signal transmitted from the MADU to the NAU for configuring the parameter associated with the NAU, and the Trigger Interface comprises a portion for uniquely identifying the NAU (NAU-Identifier) and another portion for complete description of an event which has occurred or is about to occur (Trigger-Event) and is a signal transmitted from the NAU to the MADU for notifying that the event has occurred or is about to occur.

The mobile communications terminal apparatus according to the present invention has a constitution in which the MADU has a non-volatile memory device for recording and storing information on the configuration and the status of the NAU.

The mobile communications terminal apparatus according to the present invention has a constitution which further has a NAU-specific Interface Translator (NIT) that enables information exchange between the NAU and the MADU by converting each format of the Query Interface, the Configure Interface, and the Trigger Interface.

The mobile communications terminal apparatus according to the present invention, in the above-described invention, has a constitution in which the NAU has a plurality of NAU communication channels that are able to be operated in parallel concurrently and a sub-MADU that controls the NAU communication channels and exchanges information with the MADU by using the interfaces.

The mobile communications terminal apparatus according to the present invention, in the above-described invention, has a constitution which further has an NIT that enables information exchange between the sub-MADU and the MADU by converting each format of the Query Interface, the Configure Interface, and the Trigger Interface, between the sub-MADU and the MADU.

The mobile communications terminal apparatus according to the present invention, in the above-described invention, has a constitution in which the one set of interfaces used by the MADU includes a Query Interface, Configure Interface, and Trigger Interface, where the Query Interface is a signal for communicating information on: operation mode of the NAU; cost for using a channel provided by the NAU; bandwidth of a channel provided by the NAU; quality of a channel provided by the NAU; Quality-of-Service (QoS) level supported by a channel provided by the NAU; power consumption amount information on a channel provided by the NAU; and security scheme supported by a channel provided by the NAU.

The mobile communications terminal apparatus according to the present invention, in the above-described invention, has a constitution in which the one set of interfaces used by the MADU includes Query Interface, Configure Interface, and Trigger Interface, where the Configure Interface is a signal sent to the NAU for communicating information on: operation mode of the NAU; the fact of sending of information signal from the NAU to the MADU; the fact of omitting of sending information signal from the NAU to the MADU; a criteria for the NAU's generation of the information signal which is to be sent to the MADU; a criteria for the NAU to start handoff operation; and specifying of a channel used by NAU.

The mobile communications terminal apparatus according to the present invention, in the above-described invention, has a constitution in which the one set of interfaces used by the MADU includes Query Interface, Configure Interface, and Trigger Interface, where the Trigger Interface is a signal sent from the NAU to the MADU for communicating information on: status change at the NAU associated to a base station; cost for using a channel provided by the NAU where a certain value is changed; QoS level supported by a channel provided by the NAU, where a certain value is changed; security scheme used in a channel provided by the NAU which is changed to a certain type; and modulation scheme used in a channel provided by the NAU.

A method for controlling a mobile communications terminal apparatus according to the present invention is a method for controlling a mobile communications terminal apparatus which roams among a plurality of packet switched data communications networks, where the mobile communications terminal apparatus has a Network Access Unit (NAU) having a network access mechanism uniquely set by adjusting each specification of hardware, software, and protocol, and a Multiple Access Decision Unit (MADU) that decides a channel to be used in communications session by exchanging information with the NAU by using one set of interfaces, and controls the NAU associated with the decided channel, wherein the controlling method has the steps of: transmitting the Query Interface from the MADU to the NAU for getting information on the NAU, and transmitting the Configure Interface from the MADU to the NAU for configuring the parameter associated with the NAU, and transmitting the Trigger Interface from the NAU to the MADU for notifying that the event has occurred or is about to occur.

The method for controlling the mobile communications terminal apparatus according to the present invention, in the above-described invention, further has the steps of: the MADU's controlling the NAU; the MADU's controlling the sub-MADU to control a plurality of NAU communication channels which are able to be operated in parallel concurrently and to exchange information with the MADU by using the interfaces; and the MADU's conducting communications with either the NAU or the sub-MADU by using the interfaces.

The method for controlling the mobile communications terminal apparatus according to the present invention, in the above-described invention, further has the steps of: the sub-MADU's using a unique identifier which indicates the sub-MADU itself when conducting communications with the MADU; and the MADU's sending a decision made by the sub-MADU itself based on the trigger interface to Upper Layer Protocol (UPL) that conducts communications with the MADU in a case where the unique identifier is used in the trigger interface.

The mobile communications terminal apparatus according to the present invention, in the above-described invention, further has a plurality of Tapped Delay Filters (TDFs) that predict disconnection in a channel with the packet switched data communications network based on input signals received via the data communications network; and a comparator that decides whether to send a trigger interface to the MADU or not by comparing input signals from the plurality of the TDFs in a time series.

The mobile communications terminal apparatus according to the present invention, in the above-described invention, has a constitution in which the TDF further has: a plurality of delay registers that record the input signals for every received generation and hold the input signals for a certain time period; a plurality of multipliers each of which multiples each output from each delay register by a provided weight; and an adder that sums up a plurality of multiplied values inputted from the plurality of the multipliers while adding a predetermined set value to the multiplied values .

A communications system according to the present invention has a constitution including a plurality of packet switched data communications networks and a mobile communications terminal apparatus roaming among the data communications networks, wherein the mobile communications terminal apparatus has: a Network Access Unit (NAU) having a network access mechanism uniquely set by adjusting each specification of hardware, software, and protocol; and a Multiple Access Decision Unit (MADU) that decides a channel to be used in communications session by exchanging information with the NAU by using one set of interfaces, and controls the NAU associated with the decided channel.

The communications system according to the present invention, in the above-described invention, has a constitution in which the packet switched data communications networks have a base station that dynamically configures a set of weights at the time of establishing a channel with the mobile communications terminal apparatus and that provides the mobile communications terminal apparatus with the configured set of weights, and the mobile communications terminal apparatus predicts disconnection in the channel established with the base station by using the set of weights provided from the base station.

The communications system according to the present invention, in the above-described invention, has a constitution in which the mobile communications terminal apparatus transmits a control message which contains a trigger interface transmission timing set by the MADU through the NAU to the base station, and the base station sends the set of weights corresponding to the control message to the mobile communications terminal apparatus upon reception of the control message.

The communications system according to the present invention, in the above-described invention, has a constitution in which the packet switched data communications network has a base station that establishes a channel with the mobile communications terminal apparatus, and upon reception of a trigger message transmission request from the mobile communications terminal apparatus, or upon detecting an occurrence of an event that the mobile communications terminal apparatus is moving out of operation area, where the detection is made by monitoring location of the mobile communications terminal apparatus, the base station transmits to the mobile communications terminal apparatus a trigger message which contains a unique identifier for identification of the base station with which the mobile communications terminal apparatus holds the current channel now, a unique identifier for identification of another base station with which the mobile communications terminal apparatus is going to establish a new channel now, and an estimated time when the event will occur, and the mobile communications terminal apparatus transmits a control message which contains a unique identifier for identification of the mobile communication terminal apparatus, a unique identifier for identification of the trigger message, and a time frame which is necessary for transmission of the trigger message before the estimated time of the occurrence of the event to the base station with which the current channel is held, and in addition, the mobile communication terminal apparatus requests the base station to transmit the trigger message upon the detection of the occurrence of the event.

In a communications system having a constitution including a mobile communications terminal apparatus that has a Network Access Unit (NAU) having a network access mechanism uniquely set by adjusting each specification of hardware, software, and protocol, and a Multiple Access Decision Unit (MADU) that decides a channel to be used in communications session by exchanging information with the NAU by using one set of interfaces, and controls the NAU associated with the decided channel, and also including a plurality of packet switched data communications networks having base stations which establish channels with the mobile communications terminal apparatus, a roaming method of a mobile communications terminal apparatus between a plurality of the packet switched data communications networks according to the present invention has the steps of: the mobile communication terminal apparatus's transmitting a control message which contains a unique identifier for identification of the mobile communication terminal apparatus, a unique identifier for identification of the trigger message, and a time frame which is necessary for transmission of the trigger message before the estimated time of the occurrence of the event to the base station with which the current channel is held; the mobile communication terminal apparatus's requesting the base station to transmit the trigger message upon the detection of the occurrence of the event; and the base station's transmitting to the mobile communications terminal apparatus a trigger message which contains a unique identifier for identification of the base station with which the mobile communications terminal apparatus holds the current channel now, a unique identifier for identification of another base station with which the mobile communications terminal apparatus is going to establish a new channel now, and an estimated time when the event will occur, upon reception of a trigger message transmission request from the mobile communications terminal apparatus, or upon detecting an occurrence of an event that the mobile communications terminal apparatus is moving out of operation area, where the detection is made by monitoring location of the mobile communications terminal apparatus.

Advantageous Effect of the Invention

According to a mobile communications terminal apparatus of the present invention, because the mobile communications terminal apparatus has a Network Access Unit (NAU) having a network access mechanism uniquely set by adjusting each specification of hardware, software, and protocol, and a Multiple Access Decision Unit (MADU) that decides a channel to be used in communications session by exchanging information with the NAU by using one set of interfaces, and controls the NAU associated with the decided channel, an advance trigger is transmitted to an upper layer protocol before execution of a handoff, thereby making it possible to achieve a seamless and smooth handoff through dominant control by an upper layer protocol such as UPL.

Moreover, according to the mobile communications terminal apparatus of the present invention, it is possible to predict whether the channel which is currently held by the mobile communications terminal apparatus will be disconnected or not, thereby making it possible to secure an ample preparation time necessary for switching the currently used NAU with an alternative one.

Moreover, according to the mobile communications terminal apparatus of the present invention, it is possible to actively and individually operate an alternative network access mechanism in parallel with the currently-running network access mechanism when the disconnection of the currently-used channel is anticipated, which makes it further possible to minimize the break time in communications session when the mobile communications terminal apparatus goes in and out of the operation areas of various base stations.

In addition, according to the mobile communications terminal apparatus of the present invention, a uniform format is specified on trigger interfaces, therefore, even when network interface cards supplied from different vendors and different manufacturers are used concurrently in the mobile communications terminal apparatus, it is possible to ease the complexity of the constitution of the UPL and the complexity of signal processing therein.

Furthermore, according to a communications system having a constitution which includes a mobile communications terminal apparatus according to the present invention, because the communications system supports transmission and reception of control messages and trigger messages, the above-described effects are effectively produced even for a mobile communications terminal apparatus in which a plurality of NAUs have a single access mechanism.

Brief Description of Drawings

FIG.1 is a block diagram illustrating the constitution of a mobile communications terminal apparatus according to Embodiment 1 of the present invention;
FIG.2 is a timing chart illustrating the operation of a MADU in handoff according to Embodiment 1 of the present invention;
FIG.3 is a block diagram illustrating the constitution of a mobile communications terminal apparatus according to Embodiment 2 of the present invention;
FIG.4 is a block diagram illustrating an applied example of the constitution of a mobile communications terminal apparatus according to Embodiment 2 of the present invention;
FIG.5 is a block diagram illustrating the constitution of a mobile communications terminal apparatus according to Embodiment 3 of the present invention;
FIG.6 is a block diagram illustrating the constitution of a handoff estimator used in Embodiment 4 of the present invention;
FIG.7 is a block diagram illustrating the constitution of a TDF used in Embodiment 4 of the present invention; and
FIG.8 is a schematic diagram illustrating a system having a mobile communications terminal apparatus according to Embodiment 5 of the present invention.

Best Mode for Carrying Out the Invention

The essence of the present invention is to establish the association of an old address used up to then with a new address which is used thereafter and thereby to achieve a smooth handoff without any disconnection in communications session, when a mobile communications terminal apparatus roams among packet switched data communications networks, by assigning an NAU and an NAU communications channel comprised in the NAU to each data communications network to establish channels and by actively and concurrently operating the NAU associated with or the NAU communications channel associated with each channel used before and after handoff, where such a smooth handoff is made by using a mobile communications terminal apparatus which has a NAU which has a uniquely-set network access mechanism, an MADU which decides the channel to be used in communications session, where such a decision is made by exchanging information with the NAU by using one set of interfaces, and controls the NAU which is associated with the decided channel, and a UPL which exchanges information with a plurality of the NAUs and the MADUs by using the interface and controls the NAU and the MADU dominantly.

The present invention discloses that the upper layer protocol in a mobile communications terminal apparatus is able to receive triggers from NAU(s). The trigger serves to cue the timing for the processing of signals for handoff by each component of a mobile terminal apparatus when the apparatus roams among networks. Accordingly, such a trigger could function as a signal for warning the disconnection of the channel now being used or the occurrence of a handoff. Therefore, the use of this trigger ensures the anticipated allocation of a sufficient preparation time which is necessary for the upper layer protocol to take over communications session from a certain NAU to another NAU, thereby making it possible to achieve a smooth handoff with seamless communications session.

In addition, according to the present invention, a uniform interface format is specified in order to ease the complexity of the upper layer protocol constitution and the complexity of signal processing therein. By such a means, even in a case where network interface cards supplied from different vendors and different manufacturers are used concurrently, it is possible to ensure compatibility between these cards. Moreover, the present invention specifies an interface translation routine in order to ensure the smooth integration of such network interface cards into a mobile communications terminal apparatus.

According to the present invention, aiming at the reduction of a break time in network service, trigger messages are processed in an upper layer protocol in order to achieve the handover of communications session in the upper layer, which makes a mobile communications terminal apparatus having a plurality of network access mechanisms necessary. According to the present invention, at the occasion when the upper layer protocol receives a trigger message which warns against the disconnection of a channel which is currently under use in anticipation of the actual disconnection of the channel, an alternative network access mechanism, which is a different one from the currently-used access mechanism, is started for activation prior to the actual disconnection of the channel. Accordingly, in the present invention, it follows that the preparation for handing-over of communications session is started prior to the actual occurrence of the disconnection of the channel.

Moreover, in a communications system having a constitution which includes a mobile communications terminal apparatus according to the present invention, it is possible to avoid the disconnection of the currently-used channel to achieve a smooth handoff as described above by just providing the mobile communications terminal apparatus with only a single network access mechanism, as long as the transmission of trigger messages to the mobile communications terminal apparatus and the reception of trigger messages at the mobile communications terminal apparatus is supported.

In addition, a communications system according to the present invention includes a mobile communications terminal apparatus which requests the transmission of a trigger message such as handoff warning at a designated timing and a base station which transmits, in response to the request, a trigger message having a predetermined format to the mobile communications terminal apparatus. This mobile communications terminal apparatus starts the preparation for handing communications session over to an upper layer protocol immediately upon reception of such a trigger message from the communications system.

In order to facilitate the understanding of descriptions in this specification, a brief explanation is given here on each of the following terms. However, the definition of these terms would be apparently clear for persons skilled in the art even without the following explanation.

(a) A "packet" is a separate unit of data processed into a predetermined format which could be transmitted and received via data communications network. A "packet" normally comprises two portions: a "header" portion and a "payload" portion. The "payload" portion is the portion for containing information data which is to be delivered, while the "header" portion contains information for identifying where the packet is transmitted from and where the packet is to be received at. Accordingly, the "header" portion contains an information source address and a destination address for identification of the sender and the recipient of the "packet" respectively.

(b) A "mobile node" refers to a constituent element of a packet switched data communications network, where such an element changes its point of attachment to the network. Incidentally, unless otherwise explicitly specified, a mobile node shall mean a mobile communications terminal apparatus used by an end user.

(c) A "base station" refers to a constituent element of a data communications network, where such an element provides mobile nodes with channels for joining in the network, regardless of the types of access techniques. As the illustrations of the access techniques, wireless communications, wired communications, or optical communications is cited.

Embodiments of the present invention will be described in detail below with reference to the accompanying drawings. The virtue of the present invention is further clarified with the following descriptions where the specific numbers, times, structures, and other parameters are set forth.

(Embodiment 1)

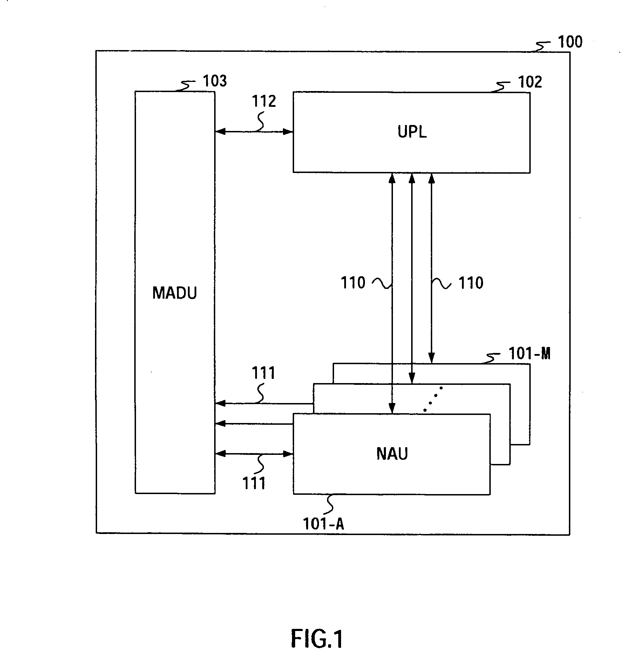

FIG.1 is a block diagram illustrating the constitution of mobile communications terminal apparatus 100.

Mobile communications terminal apparatus 100 has the M number (M being a number greater than or equal to 2) of NAUs (Network Access Units) 101, UPL (Upper Protocol Layer) 102, andMADU (Multiple Access Decision Unit) 103. When a reference is made to NAU 101-a to 101-m in a comprehensive manner without differentiation between then, the NAU will be simply denoted as NAU 101 hereinafter.

NAU 101 has a network access mechanism which includes, as its constituent elements, physical network interface, that is, physical network interface hardware, software controlling the hardware, and protocols which govern communications through deployment of such hardware. For example, under the OSI (open systems interconnection) model according to the International Organization for Standardization (ISO), NAU 101 includes all protocols relating to Physical and Data Link layers.

Because the present invention aims to provide a mobile communications terminal apparatus having a plurality of network access mechanisms, mobile communications terminal apparatus 100 has a plurality of NAU 101, that is, NAU 101-a to 101-m. Incidentally, it is possible for a single piece of physical hardware to be made up in such a way that the hardware provides two or more different network access mechanisms. The constitution is formed in such a way that each NAU 101 entails the functionalities necessary for having each network access mechanism.

Herein, NAU 101 having a certain network access mechanism is said to be active in a case where the network access mechanism therein is holding an active channel with a base station. In addition, it is also possible for single physical NAU 101 to make a plurality of connections concurrently by using a plurality of the same kind of network access mechanisms. For example, it is possible to form a plurality of active channels concurrently by using a plurality of antennae. In a case where the same kind of network access mechanisms are used in this way, it is equivalent to a case where mobile communications terminal apparatus 101 is provided with a plurality of NAUs, that is, NAU 101-a through NAU 101-m. In such a case, MADU 103 may be integrated with NAU 101 so that MADU 103 is arranged hierarchically in order to make a decision as to which channel should be used. This hierarchical arrangement will be covered in Embodiment 3 of the present invention.

UPL 102 is an abstraction to include all upper layer protocols and applications which are able to receive data packets via any of NAU 101. Using the ISO's OSI model as an example, UPL 102 includes Application, Presentation, Session, Transport, and Network layers.

The path marked with reference numeral 110 is a normal data path which a packet passes through at the time when UPL 102 passes a packet to NAU 101 for transmission or when UPL 102 acquires a packet which NAU 101 just receives.

MADU 103 makes a decision as to which individual NAU 101 is dynamically activated for use in joining in a data communications network. The main function of MADU 103 is to make preparation for using another alternative NAU 101 and further to ensure that the preparation has been completed and alternative NAU 101 is ready for use when the access link of currently-active NAU 101 is about to go down, in other words, connection loss in the channel which is now in use is imminent.

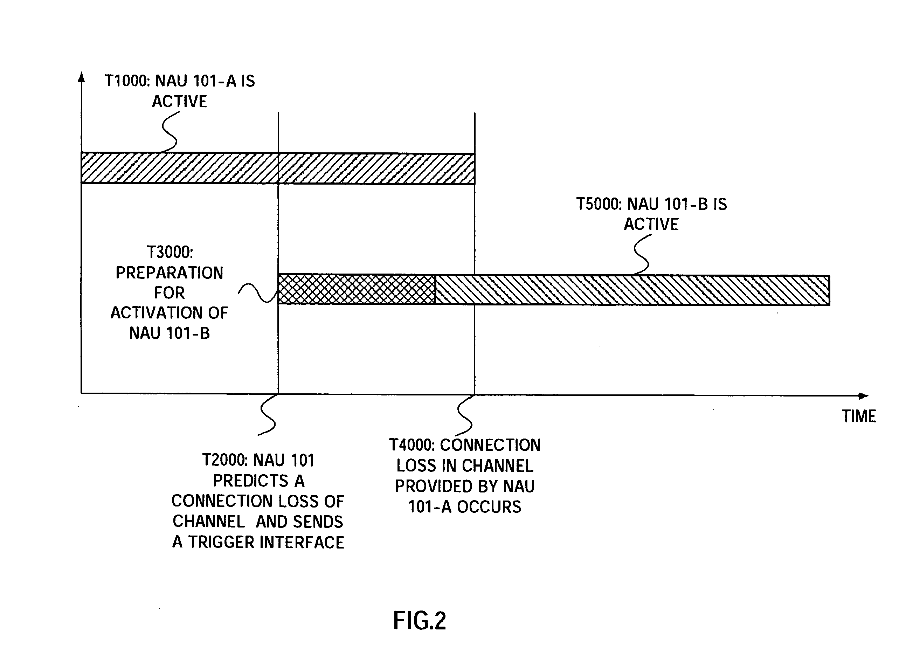

The operation of MADU 103 is explained below with reference to FIG.2. In FIG.2, NAU 101-a is active in a time period marked as T1000.

Next, at the time instant marked as T2000, a trigger interface is sent from NAU 101-a, where such a trigger interface explicitly indicates that the now-in-use channel provided by NAU 101-a is about to be disconnected in a short period of time. Upon reception of such a trigger interface, MADU 103 activates NAU 101-b.

Next, during the time period marked as T3000, MADU 103 performs preparation for activation of NAU 101-b, which is going to be used as a substitute for the NAU 101-a, and notifies to UPL 102 that communications session will be done through another NAU which is different from the currently-used one in the short period of time. This is done via control signals sent from MADU 103 to UPL 102 through a signal path marked with reference numeral 112 illustrated in FIG.1. Once after the preparation for the activation of NAU 101-b is completed, NAU 101-b starts sending of packets to UPL 102.

Accordingly, at a time instant marked as T4000, that is, at a time instant when the channel provided by NAU 101-a is actually disconnected, packets have already been started to be forwarded to UPL 102 from NAU 101-b, too. This is an ideal example; a series of all handoff procedures should have been completed, ideally, before the beginning of a time period marked as T5000 (a time period after passing of T4000), in other words, before the actual disconnection of the channel provided by NAU 101-a.

Another function of MADU 103 is to adjust between NAU 101-a to 101-m when several NAU 101 are active. At any point in time, there can be a plurality of active NAU 101 which provide communications session to UPL 102. MADU 103 decides which NAU 101 to be used for communications session in the immediate period based on the status information of each NAU 101. Whenever there is a need for changing NAU 101 to be used, MADU 103 dynamically designates another NAU 101 and informs UPL 102 of the change through signal path 112.

MADU 103 can use the following criterion when selecting which NAU 101 to be used among a plurality of NAU 101:

(i) Cost of the access mechanism: MADU 103 selects NAU 101 that offers the cheapest access (a certain network access mechanism using a network such as satellite link is by far more expensive than others such as IEEE 802.11).

(ii) Power consumption of the access mechanism: MADU 103 selects NAU 101 that offers the lowest power consumption (a certain network access mechanism using a network such as satellite link consumes by far more power than IEEE 802.11).

(iii) Bandwidth of the network access mechanism: MADU 103 selects NAU 101 that offers the highest bit-rate based on the bandwidth of the network access mechanism.

(iv) Availability of the network access mechanism: MADU 103 selects NAU 101 which would be able to maintain the longest connection time period, that is, would be expected to remain active for the longest amount of time while taking the current movement patterns of mobile terminal 100 into consideration.

(v) Quality-of-Service (QoS) support of the network access mechanism: MADU 103 selects NAU 101 that offers the best (better) QoS support (a certain network access mechanism can offer better QoS support, e.g. lower jitter, shorter delay, than the others).

(vi) Security support of the network access mechanism: MADU 103 selects NAU 101 that provides the best security (a certain network access mechanism could provide better protection of network traffic than the others).

(vii) Physical characteristics of the network access mechanism: MADU 103 selects NAU 101 that provides greater adaptability to the environment (a certain network access mechanism may be able to stand higher temperature than the others).

(viii) Location and regulatory information: MADU 103 selects NAU 101 that better fits the location where the mobile communications terminal apparatus is used (a certain network access mechanism may not be allowed to be operated in a certain area due to regulatory restrictions and so on).

(ix) Traffic load of the network access mechanism: MADU 103 selects NAU 101 burdened with the lowest signal processing load.

(x) Weighted combination (sum) of the above criteria: A set weight is added to each of above criteria, and each weighted criterion is summed up. MADU 103 selects NAU 101 that offers the largest sum (where weights may be either zero, positive or negative).

From the above description, it is possible to see a necessity for MADU 103 to be able to configure trigger settings in NAU 101. In particular, the timing at which a trigger interface should be sent is important for achieving and ensuring a smooth handoff.

Furthermore, there is a need for MADU 103 to be able to dynamically activate and deactivate NAU 101. In addition, MADU 103 is also responsible to make a decision as to which alternate NAU 101 to be activated. In order for MADU 103 to make such decisions, it needs to collect information from NAU 101. To provide such information, one set of interface format is defined. This specifies the format of control signals that are passed between MADU 103 and NAU 101, via the signal paths marked as 111 in FIG. 1 . The one set of interfaces is described in detail below.

The first interface is the Query interface, sent by MADU 103 to individual NAU 101, where the interface is used to query information about target NAU 101, and is defined as follows:

Query (IN Query_Code; OUT Query_Result)

Herein, Query_Code is a unique identifier to identify what is being queried, and Query_Result is a response corresponding to the query, and is a buffer for storing information on target NAU 101 therein.

The second interface is the Configure interface, sent by MADU 103 to individual NAU 101. This interface is used to set specific configuration parameters of target NAU 101, and is defined as follows:

Configure (IN Parameter_Code; IN Parameter_Value;)

Herein, Parameter_Code is a unique identifier to identify the configuration parameter to be set. In addition, Parameter_Value is the specified parameter to be configured. The Parameter_Value can be a compound field if necessary, and can hold a plurality of parameters for different configuration purposes.

The third interface is the Trigger interface, sent by NAU 101 to MADU 103. This interface is used for NAU 101 to send triggers / notifications of specific events to MADU 103, and is defined as follows:

Trigger (IN NAU_Identifier; IN Trigger_Event;)

Herein, NAU_Identifier is a unique identifier to identify NAU 101 that sent the trigger interface, and Trigger_Event is a descriptor that completely describes the event that has occurred or is about to occur. As an example, for a trigger of cost change, the Trigger_Event includes an event code that specifies the event type, e.g. "Cost-Rise", etc. and includes another code that specifies the corresponding data structure describing the actual cost, e.g. "10 cents, per 1 minute." In addition, there can be a plurality of Trigger_Event aggregated inside one trigger interface. Moreover, it is possible for the Trigger Interface to contain a warning on the anticipated disconnection of the channel used currently.

Because MADU 103 is able to send the above-described interface to each individual NAU 101 directly, it is not necessary to specify the NAU_Identifier in the Query Interface and the Configure Interface. Whereas for the case of the Trigger Interface, which is sent by NAU 101, NAU 101 need to let MADU 103 identify NAU 101 itself. This allows MADU 103 to identify which NAU 101 has triggered the event.

Regarding the Query interface, as examples of the queries which are able to be used by MADU 103 for querying certain status information of NAU 101, there are the following types of queries:

(1) Status query: MADU 103 is querying the status of NAU 101, such as whether the network access mechanism is active or in power-saving mode;

(2) Cost query: MADU 103 is querying the cost of the access connection, such as the charges of the service providers;

(3) Capability query: MADU 103 is querying the speed of the access connection, such as the maximum throughput allowed by the network access mechanism or the bandwidth supported;

(4) Connection query: MADU 103 is querying the quality status of the connection, such as the Signal-to-Noise Ratio (SNR), signal strength, etc;

(5) Quality-of-Service (QoS) query: MADU 103 is querying the QoS support, such as parameters to ensure the QoS of a data streams between 2 end points;

(6) Power query: MADU 103 is querying power consumption amount, such as how long could it last with current battery status; and

(7) Security query: MADU 103 is querying the security mechanism supported by NAU 101;

All these query types can be set as flags in the query code, so that one query message can carry a plurality of queries. As for queries requiring extra parameters or some fixed structure, e.g. TSPEC will be carried together with the query message if that flag present.

MADU 103 is capable of sending a plurality of Query messages to different NAU 101 concurrently. This will enable MADU 103 to have fast decision making in case of handoff.

The query result allows MADU 103 to make selection of which alternate NAU 101 to be newly activated in the event of disconnection in a channel. In addition, MADU 103 monitors the statuses of NAU 101 periodically, and computes a cost function of using each NAU 101. Once it is found that the cost of using current NAU 101 exceeds that of an alternate NAU 101, MADU 103 can force a handoff to use the cheaper channel.

Query_Result contains different return values from NAU 101 depending on the Query_Code set in the query interfaces. Any query present in the Query Code will have its result stored in the Query_Result. For that purpose, some method to associate the query with the response (query result) must be implemented. For example, it is possible to have uniform fixed data structures for all the results, and place them according to the sequence of the queries in the Query_ Code. Examples of the query results included in the Query_Result corresponding to the queries arranged in the sequences of the Query_Code are as follows;

(1) Status Query Result::= <Not_in_use::= 0x00 | Power_Save_Mode::= 0x01 | Active::= 0x02 >;
(2) Cost Query Result::= < Charging Rate> <Charging Interval>;
(3) Capability Query Result::= <Supported Bandwidth>;
(4) Connection Query Result::= <Connection Status (compound filed)>;
(5) QoS Query Result::= <TSPEC> <Priority> <DSCP code>;
(6) Power Query Result::= <How many seconds could it last with current battery>;
(7) Security Query Result::= <Security_mechanism_supported>.

MADU 103 uses the Configure interface to configure certain parameters of NAU 101. Examples of possible configure messages used when configuring parameters are as follows:

(1) activating or de-activating an NAU 101::= <Active::= 0x01| Deactive::= 0x00 | Power Save::=0x02>
(2) requesting the sending of specific trigger interfaces, e.g. when cost from using the connection changes, send a trigger to MADU 103::= <Request_Trigger::= 0x02> <Trigger_Request ::= *<Trigger_Type> *<Trigger Condition>>;
(3) requesting the cancellation of sending of specific trigger interfaces, e.g. do not sent a trigger when the modulation scheme changes::= <Request_No_Trigger ::= 0x03> <Trigger_Request ::= *<Trigger_Type> *<Trigger Condition>>;
(4) setting the timing requirements associated to the sending of specific trigger interfaces, e.g. how many seconds before the signal strength drop to certain level, a trigger must be sent ::= <Set Time for trigger ::= 0x04 > <Trigger_ Time_Request::= *<Trigger_Type> *<Time requirement>>;
(5) setting thresholds for sending certain trigger interfaces, e.g. if the ::= <Set Threshold ::= 0x05> <Trigger_ Threshold ::= *<Trigger_Type> *<Threshold>>;
(6) setting the pattern of sending certain trigger interfaces ::= <Set Trigger Pattern::= 0x06> <Trigger_patterns ::= *<Trigger_Type> *<Pattern>>;
(7) requesting NAU 101 to connect through another base station, ::= <Redirect_NAU::= 0x07> <Base station identifier>; and
(8) setting the criteria for having a handoff by NAU 101::= <Handoff_Criteria ::= 0x08> <Criteria>.

NAU 101 uses the Trigger interface to send information to MADU 103, and to get instructions on any further action to be taken.

Example of the trigger interface is as follows;

<NAU_Trigger> ::= <NAU_Identifier> <Trigger_Event ::= *<Trigger_Type>*<Trigger_Info>>

Information provided by NAU 101 to MADU 103 through the trigger interface will be used by MADU 103 for making handoff, or load balancing decisions. For example, when NAU 101 sends a trigger interface to MADU 103 stating that the cost for using the currently-used channel has increased beyond a pre-specified threshold, MADU 103 will forward some traffic of UPL 102 to another NAU 101 to reduce the cost of communications.

Examples of the information provided by NAU 101 to MADU 103 through the Trigger interface are as follows;

(1) Base station error

When a base station encounters an error, for example, lost upstream link, or some hardware problem, or disconnection of a channel for attaching to a certain data communications network, etc., MADU 103 can broadcast that to a plurality of NAU 101 associated with it, e.g. by beacon signal in the IEEE802.11 network, or send a notification individually to each NAU 101. NAU 101 will in turn provide this information on the channel conditions with the base station to MADU 103. MADU 103 uses the information for making a decision such as a decision to execute handoff to another base station, or to use another alternative NAU 101.

(2) Change in channel cost

When there are some changes in the data communication network, e.g. when a mobile router attached to another administrative domain etc., the cost for using that channel will be changed too. NAU 101 can be notified by the base station via a network access mechanism in a specific method, e.g. EAP notify message when using IEEE802.1x based control. This information will be passed to MADU 103 by NAU 101 using the Trigger interface.

(3) Change in QoS support

When there are changes in the data communication network's QoS support, e.g. in IEEE802.11e network, if the TSPEC requested by NAU 101 is not supported by the data communication network, NAU 101 can send a trigger interface to MADU 103. Provided that NAU 101 supports QoS negotiation, NAU 101 can provide the new negotiated QoS support to MADU 103 as well. Then, MADU 103 can decide whether to use NAU 101 or to perform handoff, etc.

(4) Change in security scheme

MADU 103 can use the Configure interface to set NAU 101 into a preferred security level. When NAU 101 negotiates security scheme with the base station, it may result in another security scheme. In this case, NAU 101 can use the Trigger Interface to inform MADU 103, and MADU 103 can then decide whether the new scheme is acceptable or another NAU 101 should be used.

(5) Change in modulation scheme

For some reasons, the data communications network may decide to change the modulation scheme during one active communication session of a certain NAU 101. NAU 101 with a plurality of antennas can establish and hold channels with different base stations via different modulation schemes. NAU 101 should inform MADU 103 of these changes using the Trigger Interface, since these changes will affect, for example, power consumption, delay, etc.

When there are other reasons that will trigger notification messages to be sent to MADU 103, such as signal power drops below a set threshold, NAU 101 executes a handoff to another base station. That is, in a case where the error rate exceeds a certain threshold, NAU 101 is associated with another base station to establish another channel connection.

MADU 103 needs to record and store all the status and setting information of NAU 101. This can be achieved by creating a table in the internal or external memory device of MADU 103. When a trigger interface from NAU 101 arrives, MADU 103 will update the status information records, and carry out some decision-making procedure based on the information provided, e.g. handoff decisions. For example, if NAU 101-a sent a trigger interface stating that the cost of the channel increased to 20 cents per minute, MADU 103 would scan through the table and identify NAU 101-a to 101-m with a lower cost, and determine whether it is possible to achieve a less expensive channel cost. If determined to be possible, MADU 103 diverts some of the traffic to these cheaper NAU 101.

MADU 103 can also periodically use the Query Interface to obtain the status information on NAU 101, and update the table.

The information on the configuration and the status on NAU 101 should be recorded in a non-volatile memory device held by MADU 103 so that the system need not be re-configured after a reboot or power failure. MADU 103 can also provide logging capacity and record all the decisions it has made within a certain time frame, e.g. switched to which NAU 101 at what time. Such information will be useful for problem tracking later. In addition, such information can be supplied to UPL 102 for developing new application.

Alternatively, the mobile communications terminal apparatus according to the present embodiment may be modified or further applied as described below.

MADU 103 may send a plurality of signals to a plurality of NAU 101 concurrently by letting Query_Code and Parameter_Code indicate all the signals having unique identifiers and by gathering specific signal data returned as query results, parameter values, and trigger events.

As an additional alternative, MADU 103 may be constituted as having (1) a non-volatile memory device for recording and storing status information on NAU 101, (2) a device for accessing to the non-volatile memory device, (3) a device for updating the record corresponding to a received signal upon reception of the signal from NAU101, (4) a device for updating the record upon reception of information on the new status from NAU 101, and (5) a device for updating the record upon configuring NAU 101 into new parameter sets.

As a still additional alternative, in order for MADU 103 to be able to keep and retain all information on NAU 101, MADU 103 may be constituted as having the execution steps of: (1) generating information on the status of the NAU 101 by accessing to an internally-provided or externally-provided memory device of MADU 103, (2) accessing to the memory device at the reception of a signal from NAU 101 and updating the record of the status information on NAU 101, (3) accessing to the memory device at the reception of information on the new status from NAU 101 and updating the record of the status information on NAU 101, and (4) accessing to the memory device at the configuration of NAU 101 with new parameters and updating the record of the status information on NAU 101.

As a still another alternative, NAU 101 may be constituted as having at least one of (1) a device for notifying the change in the status of NAU 101 which has established and holds a channel with a base station to MADU 103, (2) a device for the NAU 101's notifying the cost of the channel provided by NAU 101 to MADU 103, (3) a device for the NAU 101's notifying the QoS level supported in the channel provided by NAU 101 to MADU 103, (4) a device for the NAU 101's notifying the security scheme used in the channel provided by NAU 101 to MADU 103, and (5) a device for the NAU 101's notifying the modulation scheme used in the channel provided by NAU 101 to MADU 103.

As a further another alternative, NAU 101 may be constituted so as to be able to exert functionalities of: (1) providing MADU 103 with the status change on the quality of a provided channel, (2) making an anticipated preparation for establishing a channel with a packet switched data communications network, (3) notifying a decision on the network, transmitted by the base station, to MADU 103, and (4) notifying the status of handoff operation to MADU 103.

(Embodiment 2)

The above specification in each constitution element in Embodiment 1 requires all NAU 101 to understand and conform to the three defined interfaces. As NAU 101 are usually provided by different vendors and manufacturers, it may be impractical to expect all NAU 101 to conform to the three defined interfaces . Therefore, according to Embodiment 2 of the present invention, NIT 305, which is a NAU-specific translator, is added to NAU 101 in mobile communications terminal apparatus 100.

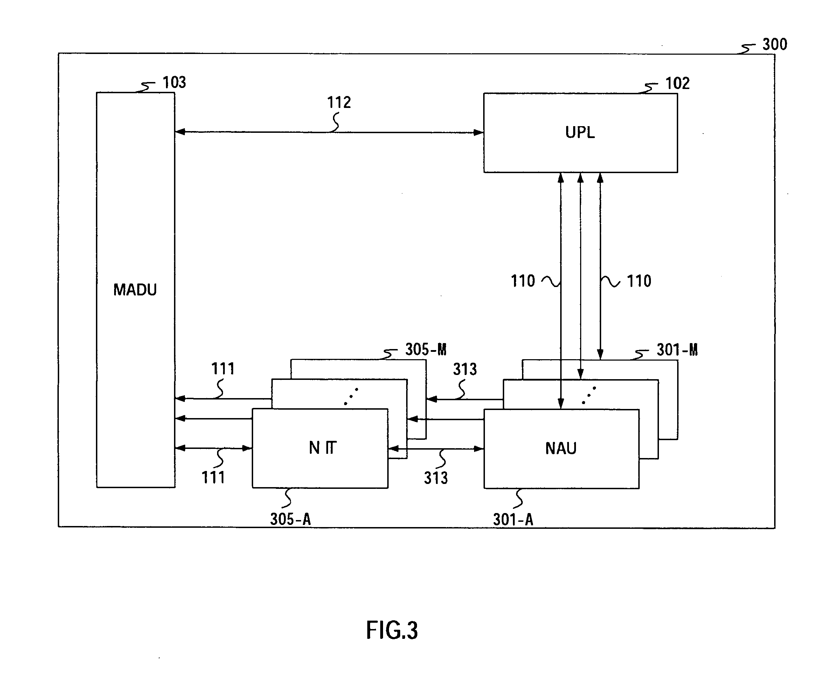

FIG.3 is a block diagram illustrating the constitution of mobile communications terminal apparatus 300. Most constitution elements of the mobile communications terminal apparatus 300 exert functionalities identical to those exerted by mobile communications terminal apparatus 100 according to Embodiment 1. Accordingly, the same reference numerals as those assigned to the constitution elements of mobile communications terminal apparatus 100 are also assigned to the constitution elements of mobile communications terminal apparatus 300 which exert functionalities identical to those exerted by mobile communications terminal apparatus 100, and their detailed explanation are omitted here.

In mobile communications terminal apparatus 300, NAU Interface Translator (NIT) 305-a to 305-m are inserted in between each NAU 301-a to 301-m and MADU 103. NIT 305 is a NAU (301-a to 301-m)-specific translator that transparently performs translation between the three specified interfaces so that NAU 301 is able to understand thetranslatedinterfaces. Through path 111 between MADU 103 and NIT 305, interfaces according to Embodiment 1 are transmitted and received. Then, through path 313 between NIT 305 and NAU 301, the interfaces translated for NAU 301 are transmitted and received. Incidentally, other than the necessary insertion of NIT 305, NAU 301 exerts functionalities identical to those exerted by NAU 101 according to Embodiment 1. In addition, because it is possible to utilize publicly-known commercially available products as NIT 305, an explanation on its specific configuration and operation is omitted here.

In this way, through deployment of NIT 305, even in a situation where a plurality of NAU 301 are supplied from different vendors and different manufactures, it is possible to interoperate the plurality of NAU 301 smoothly just by using single MADU 103.

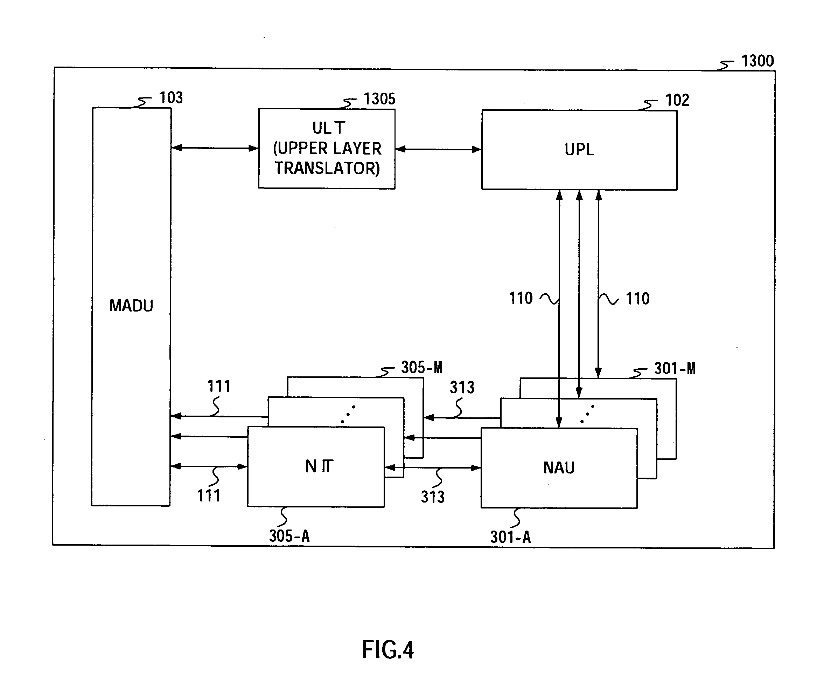

Mobile communication terminal apparatus 300 may be constituted such that MIH (Media Independent Handover) service is performed in MADU 103 such that information can be exchanged between interfaces specified by IEEE (Institute of Electrical and Electronics Engineers) 802, between an interface specified by IEEE 802 and an interface specified by other standards, or between upper layers of UPL 102. FIG.4 shows mobile communication terminal apparatus 1300 having such a constitution. In the case of the constitution shown in FIG.4, NAUs 101 are constituted such that in order to register SAPs (Service Access Points), operations corresponding to individual media of interfaces or PHY (PHYsical) media are specified and SAP Modules (SAPMs) described as NITs 305 which facilitate communication with MADU 103 and MIH service are used. In such a constitution, MADU 103 investigates the rest of SAPs to check to see if there is NIT 305 that performs communication using an interface or a PHY medium and if finds one, MADU 103 performs a query based on a usable trigger interface and then stores obtained information. A newly inserted interface transmits an LL-REGISTER.request through NIT 305 to register NAU 101 in MADU 103. Furthermore, UPL 102 which is an upper layer may query the validity of a trigger interface from MADU 103 without registration. However, in order to request for a trigger and other information and then receive them, UPL 102 first needs to register SAPMs, i.e., ULT (Upper Layer Translator) 1305 shown in FIG.4, for itself and MADU 103. UPL 102 is a plurality of upper layer protocols and the plurality of upper layer protocols require their individual SAPMs, i.e., ULT 1305. In mobile communication terminal apparatus 1300, communication of MIH service information between a lower layer interface and an upper layer protocol is performed using a SAPM provided for each interface or protocol, i.e., NIT 305 or ULT 1305. NIT 305 maps a specific value of an interface or a PHY medium for an appropriate distance of MIH service (MADU 103) and ULT 1305 similarly maps a specific value of a protocol. This is reversely performed for information or distance to be transmitted to UPL 102 through ULT 1305. This allows MADU 103 and MIH to remain general with respect to an interface or protocol which occurs in the future. Old-style interfaces and protocols can use MIH SPAMs of standard specification.

(Embodiment 3)

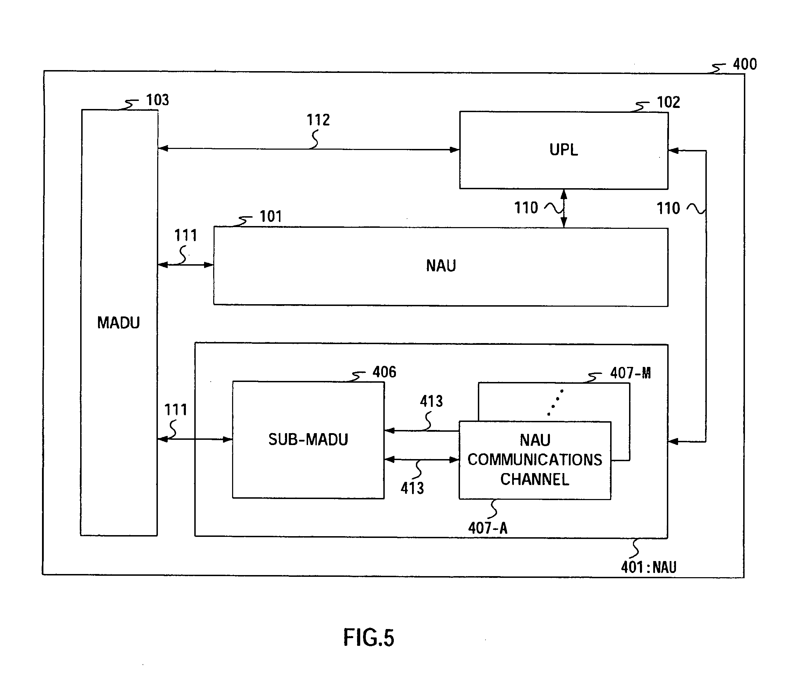

FIG.5 is a block diagram illustrating the constitution of mobile communications terminal apparatus 400 according to Embodiment 3 of the present invention. In mobile communications terminal apparatus 400, a hierarchical control scheme for controlling MADU is employed. Incidentally, most constitution elements of the mobile communications terminal apparatus 400 exert functionalities identical to those exerted by mobile communications terminal apparatus 100 according to Embodiment 1. Accordingly, the same reference numerals as those assigned to the constitution elements of the mobile communications terminal apparatus 100 are also assigned to the constitution elements of the mobile communications terminal apparatus 400 which exert functionalities identical to those exerted by the mobile communications terminal apparatus 100, and their detailed explanation are omitted here.

The mobile communications terminal apparatus 400 further has, in addition to the constitution of the mobile communications terminal apparatus 100, NAU 401 which is provided with a plurality of input channels and output channels, together with normal NAU 101. As an example of such an NAU 401, it is possible to cite a WLAN card having a plurality of antennae. Because NAU 401 is provided with a plurality of NAU communications channels 407-a to 407-m, it is possible for single NAU 401 to establish and hold a plurality of channel connections to a plurality of base stations. Therefore, it is necessary for NAU 401 to make a decision as to which NAU communications channel 407 is to be used, and for that purpose, sub-MADU 406 is provided inside NAU 401 as a constitution element to make such a decision.

When such NAU 401 is used together with other normal NAU 101, MADU 103 is deployed to provide system level controls in communications terminal apparatus 400. As shown in FIG.5, sub-MADU 406 does not conduct direct communications with UPL 102. Instead, sub-MADU 406 sends to UPL 102 necessary messages via MADU 103 through path 111. Accordingly, sub-MADU 406 exerts its functionality transparently in mobile communications terminal apparatus 400.

In addition, sub-MADU 406 is a constitution element which decides NAU communications channel 407 to be used in communications session, and therefore sub-MADU 406 is possible to use a special identifier to identify sub-MADU 406 itself in a Trigger Interface. Once central MADU 103 receives any Trigger Interface with that special identifier, MADU 103 makes a decision based on the Trigger-Event, and acts accordingly, and forward notifications to UPL 102 if necessary.

The format of the interface transmitted and received over path 413 may be unique proprietary format on path 413, however it is desirable that the format over path 413 should be the same format as that of the interface transmitted and received over path 111. Incidentally, in a case where the format of the interface transmitted and received over path 413 is constituted with a unique proprietary format, it is preferable for sub-MADU 406 to have the same function as that of NIT 305 in Embodiment 2, and thereby functioning transparently. This allows MADU 103 to operate as though MADU 103 were conducting direct communications with NAU communications channel 407.

In addition, the sub-MADU 406 maybe supplied from a vendor different from one who supplies MADU 103. In this case, it is preferable to have a configuration in which NIT 305 is placed in between sub-MADU 406 and MADU 103 so that the interfaces transmitted and received in between sub-MADU 406 and MADU 103 are translated appropriately. Incidentally, there is no specific restriction in the constitution and so on of NAU communications channels 407 as long as it performs the same functions as those of normal NAU 101.

According to mobile communications terminal apparatus 400 of the present invention, because it is possible to place sub-MADU 406 in between central MADU 103 and the plurality of NAU communications channels 407, it is possible for MADU 103 to control NAU 401 hierarchically, thereby making it possible to reduce the processing load of MADU 103 when performing such a control .

In addition, according to mobile communications terminal apparatus 400 of the present invention, because it is possible to place the NIT in between MADU 103 and sub-MADU 406, it is further possible for MADU 103 and sub-MADU 406 to be supplied from different vendors from each other.

(Embodiment 4)

From FIG.2, it is evident that, in order to achieve a smooth handoff, MADU 103 must request NAU 101-a to send a trigger interface some time before the actual event of disconnection in the currently-used channel occurs. The timing at which a trigger is sent is related to the time needed for setting up NAU 101-b, and actually transferring communications sessions from NAU 101-a to NAU 101-b. This actually implies that NAU 101 needs to perform some handoff prediction. In addition, since the setting-up time necessary for transferring the communications session varies depending on the type of network access mechanism used in that communications session, the timing at which the Trigger Interface is sent out must be set in accordance with the necessary setting-up time. MADU 103 configures the minimum time before disconnection with the Configure Interface, where the timing at which a Trigger Interface is sent from NAU 101 before the occurrence of disconnection is configured.

In Embodiment 4 according to the present invention, a specific explanation is given on the constitution and the medium provided for the NAU 101's prediction of a handoff, in mobile communications terminal apparatus 100 explained in Embodiment 1.

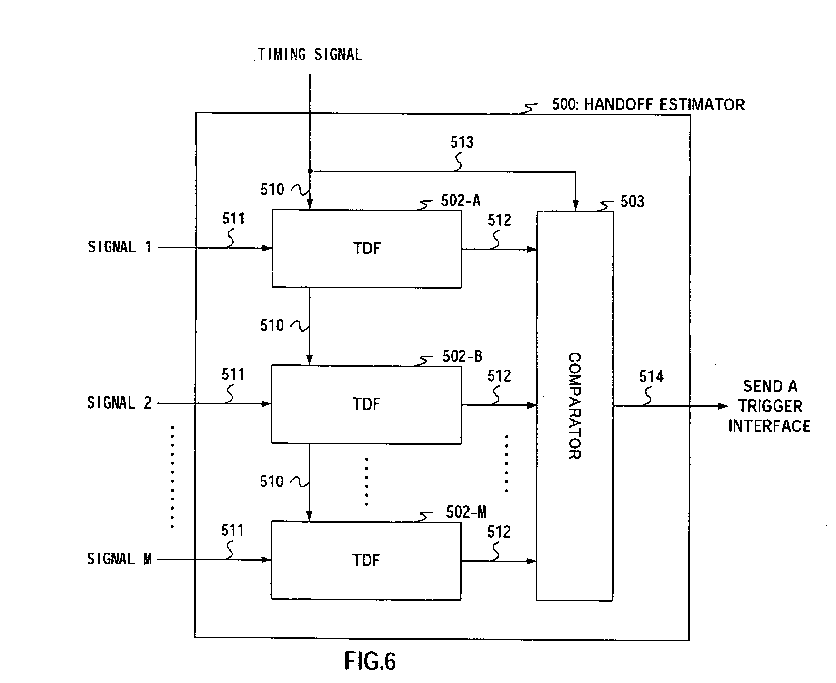

FIG.6 is a block diagram illustrating the constitution of a device known as handoff estimator 500. Handoff estimator 500 may be built inside NAU 101, or may be provided outside NAU 101 in such a way that handoff estimator 500 is able to conduct direct communications with NAU 101. NAU 101 uses handoff estimator 500 in order to send an early warning trigger interface based on the necessary timing which is set in minimum. Handoff estimator 500 includes Tapped-Delay Filters (TDF) 502-a to 502-m (where m is an integer greater than or equal to 2), and comparator 503.

TDF 502 predicts the disconnection of a channel in communications session based on signals inputted via path marked as 511. Herein, each signal inputted into TDF 502 is a signal independent from each other. As such an input signal, though there is no specific restriction in its kind, as an example, it is possible to cite the SNR of a received signal from a base station. In addition, a signal for notifying the timing at which the Trigger Interface should be transmitted is inputted via path 510 in order to control TDF 502.

The output from TDF 502 is an indication of the probability of losing the channel connections in communications session, which is calculated based on the corresponding input signal, and is fed to comparator 503 via the path marked as 512.

The comparator 503 compares the values of the identical input signal from TDF 502 in time series, and based on the signal informing the timing requirement (the input from the signal path marked as 513), decides whether or not to send a Trigger Interface to MADU 103.

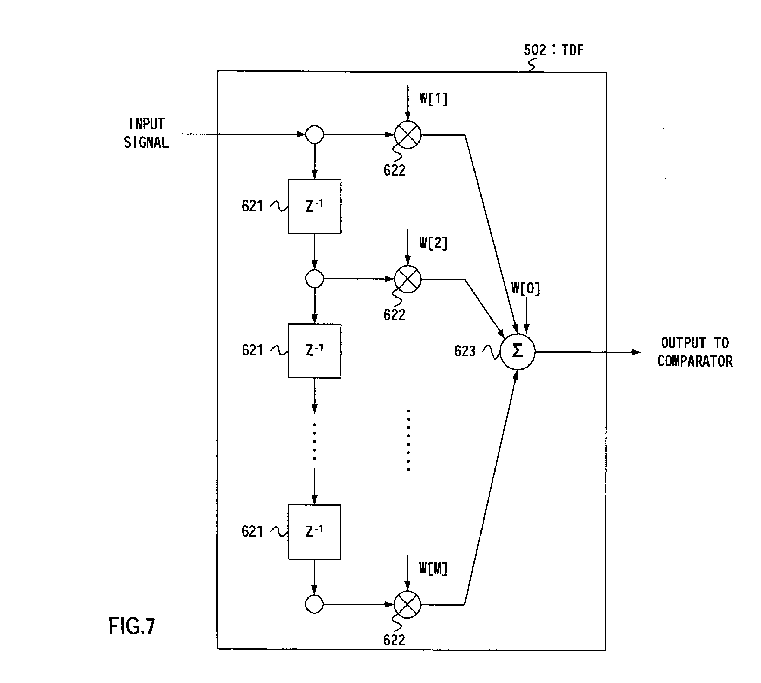

The specific constitution of TDF 502 is illustrated in FIG.7. In TDF 502, an input signal is sequentially fed through a series of delay registers marked as 621. Each delay register 621 holds the input signal temporarily, that is, until the point in time when the input signal of one previous generation is outputted from neighboring delay register 621 which has held the input signal of one previous generation. In this way, assuming the sample numbers of the input signals to be m, TDF 502 having m-1 numbers of delay registers 621 is capable of "remembering" m samples of the input signal. These "remembered" samples are inputted into multipliers 622, and weighted by a factor w [1 ] to w[m] respectively, at multipliers 622. These weighted samples are then inputted into adder 623, and then summed up, with an extra constant bias w[0], at adder 623. The summed value is inputted into comparator 503 as output from TDF 502.

Mathematically, if the input signal at a certain time instant n is denoted as x(n), then the output signal from comparator 503 at the time instant n, y(n), is expressed by the following equation:
```
[0140]

    y(n) = w[0] + sum of all i from 1 to m { x[n-i+1] .

w[i] }.    …(Equation 1)
```

Referring back to FIG.6, the signal inputted temporarily into TDF 502 is a signal for notifying the above-described timing being inputted via the path marked as 510. In accordance with the inputted timing signal, TDF 502 can configure different set of weights w[0] to w[m]. This enables TDF 502 to adapt its output timing appropriately in accordance with the inputted timing signal. In addition, the timing signal is also fed to comparator 503. This allows comparator 503 to compare the output from TDF 502 against different values based on the inputted timing signal. In addition, these different sets of weights w [0] tow[m] can be pre-specified by the vendor or manufacturer.

To determine the weights, a manufacturer can use standard training techniques for linear filters, such as Minimum Mean Square Error method (for example, refer to Non-Patent Document 3). Alternatively, the set of weights w[0] to w[m] can be dynamically provided by the base station when NAU 101 establishes channel connections to the base station. In this way, the base station can specify a standardized set of weights so that every mobile communications terminal apparatus 100 uses the same set of weights. In a case where the base station does so, the base station can specify different sets of weights for different timings requirements.

Another possibility is that the weights are pre-determined, and the predetermined set of weights is used at each mobile communications terminal apparatus 100. The number of weights to be used and the corresponding values of the weights could be a set that is determined by a standardization body. The all vendors / manufacturers conforming to that standardization body will use the weights recommended by that body and preset by the service operator who provide the mobile communications terminal apparatus 100. From the above, the vendors / manufactures are expected to use the set of weights predetermined by the service operator.

The use of TDF 502 is cited here as an implementation example of handoff estimator 500. Another constitutions for implementation of handoff estimator 500 are also possible, other than TDF 502; where such other implementation examples include the Kalman Filter, which is renowned for its high prediction capability (e.g., refer to Non-Patent Document 4), or a multilayer perception neural network or a recurrent neural network (e.g., refer to Non-Patent Document 5). For such implementation, a set of weights still needs to be appropriately specified in accordance with these filters, and so on. Again, a different set of weights can be configured based on the Trigger Interface timing requirements specified by MADU 103.

These sets of weights can be pre-determined by the vendor / manufacturer, pre-specified by a standardization body, or configured by the base station when NAU 101 establishes channel connections to the base station.

In fact, obtaining the weights from the base station is a more logical approach since the base station is in a better position to know its own operating range and characteristics. Therefore, two deployment scenarios for implementing this are described here.

In the first scenario, when NAU 101 establishes channels with a base station, the base station sends different sets of weights to NAU 101. In this case, the structure of handoff estimator 500 and the number of weights is known. For each set of weights, the base station also specifies the corresponding estimation timeframe. For instance, when a set of weights is marked to be 0-500 msec, it means that using this set of weights will allow handoff estimator 500 to set off a handoff trigger interface 0-500 msec before the handoff will occur. In addition, in a similar manner, another set of weights marked to be 500-1000 msec allows handoff estimator 500 to set off a handoff trigger interface 500-1000 msec before the handoff will occur. In this way, NAU 101 records these different sets of weights, and depending on the timing configured by MADU 103 for sending of the Trigger Interface, NAU 101 uses the set of weights corresponding to the configured timing.

The second scenario is that NAU 101 sends a control message to the base station containing the timing requirement configured by MADU 103. The base station which receives the control message then sends the corresponding set of weights to mobile communications terminal apparatus 100. According to this approach, NAU 101 needs to hold only one set of weights. Then, MADU 103 configures a different timing requirement for a trigger interface, and NAU 101 will send a query message to the base station stating the timing requirements. After that, the base station responses with the corresponding set of weights.

(Embodiment 5)

In Embodiment 5 according to the present invention, an explanation is given on procedures and modes when a mobile communications terminal apparatus does roaming in a communications system having a constitution element of a plurality of packet switched data communications networks with base stations as its network cores and another constitution element of mobile communications terminal apparatuses.

In a communications system having a constitution element of a plurality of data communications networks, a roaming of a mobile communications terminal apparatus, that is, a handoff could be triggered by the data communications network in some cases. Such a situation tends to happen when the communications system has a denser deployment of a plurality of base stations . The plurality of the base stations can cooperate with each other to monitor the positions of the mobile communications terminal apparatus in such a case. And then, these base stations are able to detect an eminent handoff event when the mobile communications terminal apparatus is moving away from the current base station to which the mobile communications terminal apparatus holds the current channel connections towards another base station.

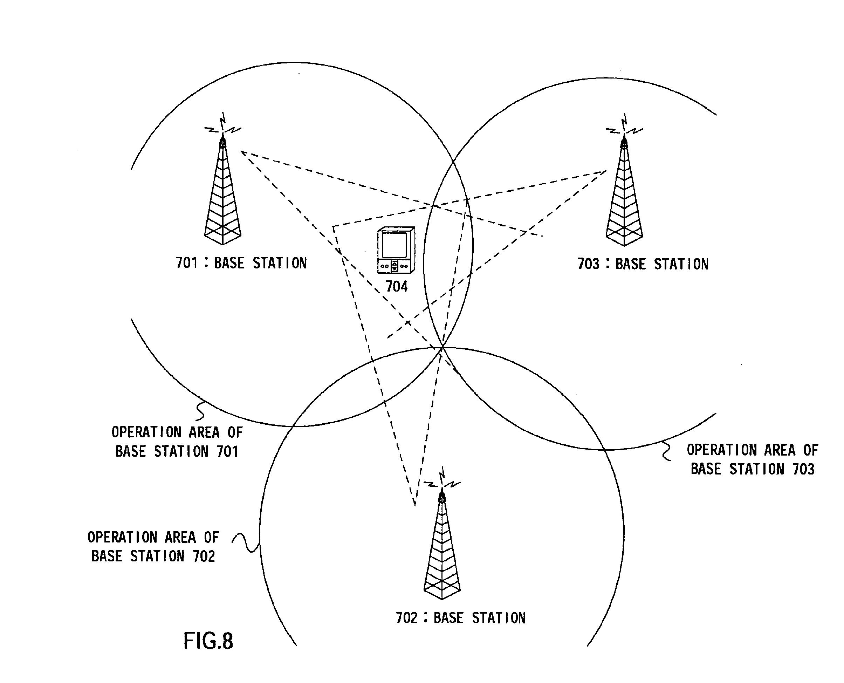

The simplified constitution of a communications system according to the present embodiment is illustrated in FIG.8. This communications system comprises three packet switched data communications networks constituted with three base stations 701, 702, and 703 as their network cores and mobile communications terminal apparatus 704. Base station 701, base station 702 and base station 703 are individually monitoring the position of mobile communications terminal apparatus 704 using a triangular measurement technique. By doing so, base stations 701, 702, and 703 can detect on a real-time basis that mobile communications terminal apparatus 704 is moving away from the operation area of the base station 701 towards the operation area of base station 703.

When mobile communications terminal apparatus 704 located within the operation area of a certain base station moves into the operation area of another base station, mobile communications terminal apparatus 704 sends control messages to the base stations at a specified timing before the actual occurrence of the handoff. Such a message will contain the following fields:

(1) the identifier of the mobile communications terminal apparatus;
(2) the requested trigger type (i.e. handoff warning); and
(3) the timing necessary to send the trigger before the predicted time of the handoff event.

In addition, when any of the base stations detects that a handoff event is eminent for mobile communications terminal apparatus 704, the base station which detected the eminent handoff sends a trigger message to mobile communications terminal apparatus 704, containing the following fields:

(1) the trigger type (i.e. handoff warning);
(2) the identifier of the current base station;
(3) the identifier of the new base station; and
(4) the time to the predicted handoff.

In addition, in this communications system, in a case where mobile communications terminal apparatus 704 has a single network access mechanism or NAU 101, and MADU 103 and UPL 102, mobile communications terminal apparatus 704 can also make use of the trigger warnings to achieve smooth handoff. MADU 103 calculates the necessary time to perform communications session handoff at UPL 102, that is, t_handoff. MADU 103 then sends a control message requesting the base station to send trigger messages as handoff warning messages by the calculated t_handoff before the predicted handoff event.

When NAU 101 receives such a warning message, NAU 101 sends a trigger toMADU 103 using the Trigger Interface. After that, MADU 103 instructs UPL 102 to prepare for communications session handoff in anticipation of the handoff event. This allows a smooth handoff for UPL 102.

As explained in Embodiment 4 of the present invention, it is possible for mobile communications terminal apparatus 704 to track its own movement with the aid of base stations 701, 702, and 703. Accordingly, since the intended function of TDF 502 is the estimation of the time of the occurrence of an anticipated handoff event, base stations 701, 702, and 703 provide a set of weights to mobile communications terminal apparatus 704 for use in a filter installed in mobile communications terminal apparatus 704. For this kind of communications system, mobile communications terminal apparatus 704 sends a control message containing following fields to at least one of base stations 701, 702, and 703:

(1) the identifier of the mobile terminal;
(2) the requested trigger type (i.e. handoff warning); and
(3) the timing necessary to send the trigger before the predicted time of the handoff event. [0160] In addition, base stations 701, 702, and 703 respond with another type of control message, together with the set of weights to be used by mobile communications terminal apparatus 704. The response sent by base stations 701, 702, and 703 will contain the following fields:

(1) response type (to indicate a set of weights is contained in the message);
(2) the identifier of the current base station;
(3) the timeframe to predict a handoff event; and
(4) the set of weights to be used with the filter installed on mobile communications terminal apparatus 704 for prediction of a handoff event.

Industrial Applicability

The present invention is usefully applicable to a mobile communications terminal apparatus and so on which is connectable to a plurality of packet switched data communications networks and changes its point of attachment for joining in the network, in other words, does roaming among the networks because an advance trigger interface is transmitted to an upper layer protocol before execution of a handoff, thereby making it possible to achieve a seamless and smooth handoff through dominant control by an upper layer protocol such as UPL.

**Claims**

1. A mobile communications terminal apparatus (100, 300, 400, 704, 1300) for moving between packet switched data communications networks, the apparatus comprising:

   a network access unit (101, 301) having a network access mechanism; and
   a multiple access decision unit (103) adapted to decide a channel to be used in a communications session by exchanging information with the network access unit by using one set of interfaces, and to control the network access unit associated with the decided channel;
   **characterized in that**
   the multiple access decision unit is further adapted to notify, to an upper layer (102), that a current communications session will be done through another network access unit.

2. The mobile communications terminal apparatus according to claim 1, wherein the notification comprises information that the other network access unit is to be used after the channel used for the current communications session is disconnected.

3. The mobile communications terminal apparatus according to claim 1, wherein the one set of interfaces used by the multiple access decision unit comprises a query interface, a configure interface, and a trigger interface;
   and wherein the query interface comprises a portion for identification of a query type and a portion of a query result, wherein the query interface is a signal transmitted from the multiple access decision unit to the network access unit for getting information on the network access unit;
   and wherein the configure interface comprises a portion for indicating a parameter to be configured and a portion of a new value of the parameter, wherein the parameter being a code showing information signal to transmit from the network access unit to the multiple access decision unit, and wherein the new value of the parameter being used to transmit a signal of a criteria for generation of the information signal which is to be sent to the multiple access decision unit, and wherein the configure interface is a signal transmitted from the multiple access decision unit to the network access unit for configuring the parameter associated with the network access unit;
   and wherein the trigger interface comprises a portion for uniquely identifying the network access unit and an event which has occurred or is about to occur, and wherein the trigger interface is a signal transmitted from the network access unit to the multiple access decision unit for notifying that the event has occurred or is about to occur.

4. The mobile communications terminal apparatus according to claim 1, wherein the multiple access decision unit comprises a non-volatile memory device for recording and storing information on configuration and status of the network access unit.

5. The mobile communications terminal apparatus according to claim 1, wherein the one set of interfaces used by the multiple access decision unit comprises a query interface, a configure interface, and a trigger interface, the apparatus further comprising a network access unit-specific interface translator (305) adapted to enable information exchange between the network access unit and the multiple access decision unit by converting each format of the query interface, the configure interface, and the trigger interface.

6. The mobile communications terminal apparatus according to claim 1, wherein the network access unit comprises:

   a plurality of network access unit communication channels (407) adapted to be operated in parallel concurrently; and
   a sub multiple access decision unit (406) adapted to control the network access unit communication channels and to exchange information with the multiple access decision unit using the interfaces.

7. The mobile communications terminal apparatus according to claim 6, wherein the one set of interfaces used by the multiple access decision unit comprises a query interface, a configure interface, and a trigger interface, the apparatus further comprising a network access unit-specific interface translator (305) adapted to enable information exchange between the sub- multiple access decision unit and the multiple access decision unit by converting each format of the query interface, the configure interface, and the trigger interface, between the sub-multiple access decision unit and the multiple access decision unit.

8. The mobile communications terminal apparatus according to claim 1, wherein:

the one set of interfaces used by the multiple access decision unit comprises a query interface, a configure interface, and a trigger interface; and
the query interface is a signal for communicating information on:

operation mode of the network access unit;
cost for using a channel provided by the network access unit;
bandwidth of the channel provided by the network access unit;
quality of the channel provided by the network access unit;
quality-of-service level supported by the channel provided by the network access unit;
power consumption amount information on the channel provided by the network access unit; and
security scheme supported by the channel provided by the network access unit.

9. The mobile communications terminal apparatus according to claim 1, wherein:

the one set of interfaces used by the multiple access decision unit comprises a query interface, a configure interface, and a trigger interface; and
the configure interface is a signal sent to the network access unit for communicating information on:

operation mode of the network access unit;
a fact of sending of information signal from the network access unit to the multiple access decision unit;
a fact of omitting of sending information signal from the network access unit to the multiple access decision unit;
a criteria for the network access unit's generation of the information signal which is to be sent to the multiple access decision unit;
a criteria for the network access unit to start handoff operation; and
specifying of a channel used by network access unit.

10. The mobile communications terminal apparatus according to claim 1, wherein:

the one set of interfaces used by the multiple access decision unit comprises a query interface, a configure interface, and a trigger interface; and
the trigger interface is a signal sent from the network access unit to the multiple access decision unit for communicating information on:

status change at the network access unit associated to a base station; and
cost for using a channel provided by the network access unit where a certain value is changed;
quality-of-service level supported by a channel provided by the network access unit where a certain value is changed;
security scheme used in a channel provided by the network access unit which is changed to a certain type; and
modulation scheme used in a channel provided by the network access unit.

11. The mobile communications terminal apparatus according to claim 1, further comprising:

a plurality of tapped delay filters (502) adapted to predict disconnection of a channel from the packet switched data communications network based on input signals received via the data communications network; and
a comparator (503) adapted to decide whether or not to send a trigger interface to the multiple access decision unit by comparing input signals from the plurality of the tapped delay filters in a time series.

12. The mobile communications terminal apparatus according to claim 11, wherein the tapped delay filter further comprises:

a plurality of delay registers (621) adapted to record the input signals for every received generation and hold the input signals for a certain time period;
a plurality of multipliers (622) each of which is adapted to multiply each output from each delay register by a weight provided for each delay register; and
an adder (623) adapted to sum up a plurality of multiplied values inputted from the plurality of the multipliers while adding a predetermined set value to the multiplied values.

13. A method for controlling a mobile communications terminal apparatus for moving between packet switched data communications networks, where the mobile communications terminal apparatus comprises a network access unit having a network access mechanism and a multiple access decision unit, wherein the method comprises the steps of:

deciding, by the multiple access decision unit, a channel to be used in a communications session by exchanging information with the network access unit by using one set of interfaces; and
controlling, by the multiple access decision unit, the network access unit associated with the decided channel; **characterized in that** the method further comprises the steps of:

transmitting, from the multiple access decision unit to the network access unit, a query interface for getting information on the network access unit;
transmitting, from the multiple access decision unit to the network access unit, a configure interface for configuring the parameter associated with the network access unit;
transmitting, from the network access unit to the multiple access decision unit, a trigger interface for notifying that an event has occurred or is about to occur; and
notifying, by the multiple access decision unit, to an upper layer, that a current communications session will be done through another network access unit.

14. The method for controlling the mobile communications terminal apparatus according to claim 13, further comprising the steps of:

in the multiple access decision unit, controlling the network access unit;
controlling, by the multiple access decision unit, the sub-multiple access decision unit to control a plurality of network access unit communication channels which are able to be operated in parallel concurrently and to exchange information with the multiple access decision unit using the interfaces; and
conducting, by the multiple access decision unit, communications with either the network access unit or the sub-multiple access decision unit using the interfaces.

15. The method for controlling the mobile communications terminal apparatus according to claim 14, further comprising the steps of:

using, by the sub-multiple access decision unit, a unique identifier which indicates the sub-multiple access decision unit itself when conducting communications with the multiple access decision unit; and
sending, by the sub-multiple access decision unit, a decision made by the sub-multiple access decision unit based on the trigger interface to upper layer protocol that conducts communications with the network access unit in a case where the unique identifier is used in the trigger interface.

16. A communications system having a constitution including packet switched data communications networks and the mobile communications terminal apparatus according to one of claims 1 to 12 for moving between the data communications networks.

17. The communications system according to claim 16, wherein:

the packet switched data communications networks comprise a base station (701, 702, 703) adapted to dynamically configure a set of weights at the time of establishing a channel with the mobile communications terminal apparatus and further adapted to provide the mobile communications terminal apparatus with the configured set of weights; and wherein
the mobile communications terminal apparatus is further adapted to predict disconnection of the channel established with the base station using the set of weights provided from the base station.

18. The communications system according to claim 17, wherein the mobile communications terminal apparatus transmits a control message which contains a trigger interface transmission timing set by the multiple access decision unit through the network access unit to the base station, and the base station sends the set of weights corresponding to the control message to the mobile communications terminal apparatus upon reception of the control message.

**19.** The communications system according to claim 16, wherein:

the packet switched data communications network comprises a base station (701, 702, 703) adapted to establish a channel with the mobile communications terminal apparatus;
and wherein the base station is further adapted to transmit, to the mobile communications terminal apparatus, a trigger message which contains a unique identifier for identification of the base station with which the mobile communications terminal apparatus holds the current channel now, a unique identifier for identification of another base station with which the mobile communications terminal apparatus is going to establish a new channel now, and an estimated time when the event will occur,
upon reception of a trigger message transmission request from the mobile communications terminal apparatus, or upon detecting an occurrence of an event that the mobile communications terminal apparatus is moving out of operation area, where the detection is made by monitoring location of the mobile communications terminal apparatus;
and wherein the mobile communications terminal apparatus is further adapted to transmit, to the base station with which the current channel is held, a control message which contains a unique identifier for identification of the mobile communication terminal apparatus, a unique identifier for identification of the trigger message, and a time frame which is necessary for transmission of the trigger message before the estimated time of the occurrence of the event, and wherein the mobile communication terminal apparatus is further adapted to additionally request the base station to transmit the trigger message upon the detection of the occurrence of the event.

**Patentansprüche**

**1.** Mobilkommunikations-Endgerätvorrichtung (100, 300, 400, 704, 1300) zum Bewegen zwischen paketvermittelten Datenkommunikations-Netzwerken, wobei die Vorrichtung umfasst:

eine Netzwerkzugangs-Einheit (101, 301), die über einen Netzwerkzugangs-Mechanismus verfügt; und
eine Mehrfachzugangs-Bestimmungseinheit (103), die so eingerichtet ist, dass sie einen in einer Kommunikations-Sitzung zu nutzenden Kanal bestimmt, indem sie unter Verwendung einer Gruppe von Schnittstellen Informationen mit der Netzwerkzugangs-Einheit austauscht und die Netzwerkzugangs-Einheit steuert, die dem bestimmten Kanal zugeordnet ist;
**dadurch gekennzeichnet, dass**
die Mehrfachzugangs-Bestimmungseinheit des Weiteren so eingerichtet ist, dass sie einer oberen Schicht (102) mitteilt, dass eine aktuelle Kommunikations-Sitzung über eine andere Netzwerkzugangs-Einheit durchgeführt wird.

**2.** Mobilkommunikations-Endgerätvorrichtung nach Anspruch 1, wobei die Mitteilung Informationen dahingehend umfasst, dass die andere Netzwerkzugangs-Einheit zu verwenden ist, nachdem der für die aktuelle Kommunikations-Sitzung verwendete Kanal getrennt wird.

**3.** Mobilkommunikations-Endgerätvorrichtung nach Anspruch 1, wobei die eine Gruppe von Schnittstellen, die von der Mehrfachzugangs-Bestimmungseinheit verwendet wird, eine Abfrage-Schnittstelle, eine Konfigurier-Schnittstelle und eine Auslöse-Schnittstelle umfasst;
die Abfrage-Schnittstelle einen Abschnitt für Identifizierung eines Abfrage-Typs sowie einen Abschnitt eines Abfrage-Ergebnisses umfasst, und die Abfrage-Schnittstelle ein Signal ist, das von der Mehrfachzugangs-Bestimmungseinheit zu der Netzwerkzugangs-Einheit übertragen wird, um Informationen über die Netzwerkzugangs-Einheit zu erhalten;
die Konfigurier-Schnittstelle einen Abschnitt zum Anzeigen eines zu konfigurierenden Parameters sowie einen Abschnitt eines neuen Wertes des Parameters umfasst, der Parameter ein Code ist, der ein Informations-Signal zum Übertragen von der Netzwerkzugangs-Einheit zu der Mehrfachzugangs-Bestimmungseinheit zeigt, und der neue Wert des Parameters verwendet wird, um ein Signal eines Kriteriums zum Erzeugen des zu der Mehrfachzugangs-Bestimmungseinheit zu übertragenden Informationssignals zu übertragen, und die Konfigurier-Schnittstelle ein Signal ist, das von der Mehrfachzugangs-Bestimmungseinheit zu der Netzwerkzugangs-Einheit übertragen wird, um den mit der Netzwerkzugangs-Einheit zusammenhängenden Parameter zu konfigurieren;
und die Auslöse-Schnittstelle einen Abschnitt zum eindeutigen Identifizieren der Netzwerkzugangs-Einheit sowie ein Ereignis umfasst, das stattgefunden hat oder stattfinden wird, und die Auslöse-Schnittstelle ein Signal ist, das von der Netzwerkzugangs-Einheit zu der Mehrfachzugangs-Bestimmungseinheit übertragen wird, um mitzuteilen, dass das Ereignis stattgefunden hat oder stattfinden wird.

4. Mobilkommunikations-Endgerätvorrichtung nach Anspruch 1, wobei die Mehrfachzugangs-Bestimmungseinheit eine nicht-flüchtige Speichereinrichtung zum Aufzeichnen und Speichern von Informationen über Konfiguration und Status der Netzwerkzugangs-Einheit umfasst.

5. Mobilkommunikations-Endgerätvorrichtung nach Anspruch 1, wobei die von der Mehrfachzugangs-Bestimmungseinheit verwendete eine Gruppe von Schnittstellen eine Abfrage-Schnittstelle, eine Konfigurier-Schnittstelle sowie eine Auslöse-Schnittstelle umfasst und die Vorrichtung des Weiteren einen für die Netzwerkzugangs-Einheit spezifischen Schnittstellen-Übersetzer (305) umfasst, der so eingerichtet ist, dass er Informationsaustausch zwischen der Netzwerkzugangs-Einheit und der Mehrfachzugangs-Bestimmungseinheit durch Umwandeln jedes Formats der Abfrage-Schnittstelle, der Konfigurier-Schnittstelle und der Auslöse-Schnittstelle ermöglicht.

6. Mobilkommunikations-Endgerätvorrichtung nach Anspruch 1, wobei die Netzwerkzugangs-Einheit umfasst:

   eine Vielzahl von Kommunikationskanälen (407) der Netzwerkzugangs-Einheit, die für gleichzeitigen parallelen Betrieb eingerichtet sind; und
   eine Neben-Mehrfachzugangs-Bestimmungseinheit (406), die so eingerichtet ist, dass sie die Kommunikationskanäle der Netzwerkzugangs-Einheit steuert und Informationen mit der Mehrfachzugangs-Bestimmungseinheit unter Verwendung der Schnittstellen austauscht.

7. Mobilkommunikations-Endgerätvorrichtung nach Anspruch 6, wobei die von der Mehrfachzugangs-Bestimmungseinheit verwendete eine Gruppe von Schnittstellen eine Abfrage-Schnittstelle, eine Konfigurier-Schnittstelle sowie eine Auslöse-Schnittstelle umfasst und die Vorrichtung des Weiteren einen für die Netzwerkzugangs-Einheit spezifischen Schnittstellen-Übersetzer (305), der so eingerichtet ist, dass er Informationsaustausch zwischen der Mehrfachzugangs-Bestimmungseinheit und der Neben-Mehrfachzugangs-Bestimmungseinheit durch Umwandeln jedes Formats der Abfrage-Schnittstelle, der Konfigurier-Schnittstelle und der Auslöse-Schnittstelle ermöglicht, zwischen der Neben-Mehrfachzugangs-Bestimmungseinheit und der Mehrfachzugangs-Bestimmungseinheit umfasst.

8. Mobilkommunikations-Endgerätvorrichtung nach Anspruch 1, wobei:

   die eine Gruppe von Schnittstellen, die von der Mehrfachzugangs-Bestimmungseinheit verwendet wird, eine Abfrage-Schnittstelle, eine Konfigurier-Schnittstelle und eine Auslöse-Schnittstelle umfasst; und
   die Abfrage-Schnittstelle ein Signal ist, mit dem Informationen übertragen werden über:

   einen Betriebsmodus der Netzwerkzugangs-Einheit;
   Kosten für Nutzung eines durch die Netzwerkzugangs-Einheit bereitgestellten Kanals;
   Bandbreite des durch die Netzwerkzugangs-Einheit bereitgestellten Kanals;
   Qualität des durch die Netzwerkzugangs-Einheit bereitgestellten Kanals;
   Dienstgütestufe, die von dem durch die Netzwerkzugangs-Einheit bereitgestellten Kanal unterstützt wird;
   Informationen zum Maß des Energieverbrauchs über den durch die Netzwerkzugangs-Einheit bereitgestellten Kanal; und
   Sicherheitsverfahren, das von dem durch die Netzwerkzugangs-Einheit bereitgestellten Kanal unterstützt wird.

9. Mobilkommunikations-Endgerätvorrichtung nach Anspruch 1, wobei:

   die eine Gruppe von Schnittstellen, die von der Mehrfachzugangs-Bestimmungseinheit verwendet wird, eine Abfrage-Schnittstelle, eine Konfigurier-Schnittstelle und eine Auslöse-Schnittstelle umfasst; und
   die Konfigurier-Schnittstelle ein Signal ist, das zu der Netzwerkzugangs-Einheit gesendet wird, um Informationen zu übertragen über:

   Betriebsmodus der Netzwerkzugangs-Einheit;
   eine Tatsache des Sendens eines Informations-Signals von der Netzwerkzugangs-Einheit zu der Mehrfachzugangs-Bestimmungseinheit;
   eine Tatsache des Unterlassens von Senden eines Informations-Signals von der Netzwerkzugangs-Einheit zu der Mehrfachzugangs-Bestimmungseinheit;

ein Kriterium für die Erzeugung des zu der Mehrfachzugangs-Bestimmungseinheit zu sendenden Informations-Signals durch die Netzwerkzugangs-Einheit;

ein Kriterium zum Starten von einem Handover-Betrieb für die Netzwerkzugangs-Einheit, und Spezifizieren eines durch die Netzwerkzugangs-Einheit verwendeten Kanals.

10. Mobilkommunikations-Endgerätvorrichtung nach Anspruch 1, wobei:

die eine Gruppe von Schnittstellen, die von der Mehrfachzugangs-Bestimmungseinheit verwendet wird, eine Abfrage-Schnittstelle, eine Konfigurier-Schnittstelle und eine Auslöse-Schnittstelle umfasst; und

die Auslöse-Schnittstelle ein Signal ist, das von der Netzwerkzugangs-Einheit zu der Mehrfachzugangs-Bestimmungseinheit gesendet wird, um Informationen zu übertragen über:

Statusänderung an der mit einer Basisstation verbundenen Netzwerkzugangs-Einheit;

Kosten für Nutzung eines durch die Netzwerkzugangs-Einheit bereitgestellten Kanals, wenn ein bestimmter Wert geändert wird;

Dienstgütestufe, die von einem durch die Netzwerkzugangs-Einheit bereitgestellten Kanal unterstützt wird, wenn ein bestimmter Wert geändert wird;

Sicherheitsverfahren, das in einem durch die Netzwerkzugangs-Einheit bereitgestellten Kanal verwendet wird, das auf einen bestimmten Typ geändert wird; und

Modulationsschema, das in einem durch die Netzwerkzugangs-Einheit bereitgestellten Kanal verwendet wird.

11. Mobilkommunikations-Endgerätvorrichtung nach Anspruch 1, die des Weiteren umfasst:

eine Vielzahl abgegriffener Verzögerungs-Filter (tapped delay filters) (502), die so eingerichtet sind, dass sie Trennung eines Kanals von dem paketvermittelten Datenkommunikations-Netzwerk auf Basis von über das Datenkommunikations-Netzwerk empfangenen Eingangssignalen vorhersagen; und

einen Komparator (503), der so eingerichtet ist, dass er bestimmt, ob eine Auslöse-Schnittstelle zu der Mehrfachzugangs-Bestimmungseinheit gesendet wird oder nicht, indem er Eingangssignale von der Vielzahl abgegriffener Verzögerungs-Filter in einer Zeitreihe vergleicht.

12. Mobilkommunikations-Endgerätvorrichtung nach Anspruch 11, wobei das abgegriffene Verzögerungs-Filter des Weiteren umfasst:

eine Vielzahl von Verzögerungs-Registern (621), die so eingerichtet sind, dass sie die Eingangssignale für jede empfangene Erzeugung aufzeichnen und die Eingangssignale über einen bestimmten Zeitraum halten;

eine Vielzahl von Multiplikatoren (622), von denen jeder so eingerichtet ist, dass er jeden Ausgang von jedem Verzögerungs-Register mit einem Gewichtungsfaktor multipliziert, das für jedes Verzögerungs-Register bereitgestellt wird; und

einen Addierer (623), der so eingerichtet ist, dass er eine Vielzahl von der Vielzahl der Multiplikatoren eingegebener multiplizierter Werte summiert und dabei einen vorgegebenen Sollwert zu den multiplizierten Werten addiert.

13. Verfahren zum Steuern einer Mobilkommunikations-Endgerätvorrichtung zum Bewegen zwischen paketvermittelten Datenkommunikations-Netzwerken, wobei die Mobilkommunikations-Endgerätvorrichtung eine Netzwerkzugangs-Einheit, die über einen Netzwerkzugangs-Mechanismus verfügt, und eine Mehrfachzugangs-Bestimmungseinheit umfasst, wobei das Verfahren die folgenden Schritte umfasst:

Bestimmen eines in einer Kommunikations-Sitzung zu nutzenden Kanals durch die Mehrfachzugangs-Bestimmungseinheit durch Austauschen von Informationen mit der Netzwerkzugangs-Einheit unter Verwendung einer Gruppe von Schnittstellen; und

Steuern der Netzwerkzugang-Einheit, die dem bestimmten Kanal zugeordnet ist, durch die Mehrfachzugangs-Bestimmungseinheit;

**dadurch gekennzeichnet, dass** das Verfahren des Weiteren die folgenden Schritte umfasst:

Übertragen einer Abfrage-Schnittstelle von der Mehrfachzugangs-Bestimmungseinheit zu der Netzwerkzugangs-Einheit, um Informationen über die Netzwerkzugangs-Einheit zu erhalten;

Übertragen einer Konfigurier-Schnittstelle von der Mehrfachzugangs-Bestimmungseinheit zu der Netzwerkzugangs-Einheit, um den mit der Netzwerkzugangs-Einheit zugeordneten Parameter zu konfigurieren;
Übertragen einer Auslöse-Schnittstelle von der Netzwerkzugangs-Einheit zu der Mehrfachzugangs-Bestimmungseinheit, um mitzuteilen, dass ein Ereignis stattgefunden hat oder stattfinden wird; und
Übermitteln einer Mitteilung, dass eine momentane Kommunikations-Sitzung über eine andere Netzwerkzugangs-Einheit durchgeführt wird, durch die Mehrfachzugangs-Bestimmungseinheit zu einer oberen Schicht.

**14.** Verfahren zum Steuern der Mobilkommunikations-Endgerätvorrichtung nach Anspruch 13, das des Weiteren die folgenden Schritte umfasst:

Steuern der Netzwerkzugangs-Einheit in der Mehrfachzugangs-Bestimmungseinheit;
Steuern der Neben-Mehrfachzugangs-Bestimmungseinheit durch die Mehrfachzugangs-Bestimmungseinheit, um eine Vielzahl von Kommunikationskanälen der Netzwerkzugangs-Einheit zu steuern, die gleichzeitig parallel betrieben werden können, und um Informationen mit der Mehrfachzugangs-Bestimmungseinheit unter Verwendung der Schnittstellen auszutauschen; und
Durchführen, mittels der Mehrfachzugangs-Bestimmungseinheit, von Kommunikation entweder mit der Netzwerkzugangs-Einheit oder der Neben-Mehrfachzugangs-Bestimmungseinheit unter Verwendung der Schnittstellen.

**15.** Verfahren zum Steuern der Mobilkommunikations-Endgerätvorrichtung nach Anspruch 14, das des Weiteren die folgenden Schritte umfasst:

Verwenden einer eindeutigen Kennung durch die Neben-Mehrfachzugangs-Bestimmungseinheit, die die Neben-Mehrfachzugangs-Bestimmungseinheit selbst angibt, wenn Kommunikation mit der Mehrfachzugangs-Bestimmungseinheit durchgeführt wird; und
Senden einer durch die Neben-Mehrfachzugangs-Bestimmungseinheit auf Basis der Auslöse-Schnittstelle getroffenen Entscheidung durch die Neben-Mehrfachzugangs-Bestimmungseinheit zu einem Protokoll einer oberen Schicht, das Kommunikation mit der Netzwerkzugangs-Einheit durchführt, wenn die eindeutige Kennung in der Auslöse-Schnittstelle verwendet wird.

**16.** Kommunikationssystem, das einen Aufbau hat, der paketvermittelte Datenkommunikations-Netzwerke und die Mobilkommunikations-Endgerätvorrichtung nach einem der Ansprüche 1 bis 12 zum Bewegen zwischen den Datenkommunikations-Netzwerken enthält.

**17.** Kommunikationssystem nach Anspruch 16, wobei
die paketvermittelten Datenkommunikations-Netzwerke eine Basisstation (701, 702, 703) umfassen, die so eingerichtet ist, dass sie dynamisch eine Gruppe von Gewichten beim Einrichten eines Kanals mit der Mobilkommunikations-Endgerätvorrichtung konfiguriert, und des Weiteren so eingerichtet ist, dass sie die konfigurierte Gruppe von Gewichten der Mobilkommunikations-Endgerätvorrichtung bereitstellt; und
die Mobilkommunikations-Endgerätvorrichtung des Weiteren so eingerichtet ist, dass sie Trennung des mit der Basisstation eingerichteten Kanals unter Verwendung der von der Basisstation bereitgestellten Gruppe von Gewichten vorhersagt.

**18.** Kommunikationssystem nach Anspruch 17, wobei die Mobilkommunikations-Endgerätvorrichtung eine Steuernachricht, die eine durch die Mehrfachzugangs-Bestimmungseinheit festgelegte Auslöse-Schnittstellen-Übertragungszeit enthält, über die Netzwerkzugangs-Einheit zu der Basisstation überträgt, und die Basisstation die der Steuernachricht entsprechende Gruppe von Gewichten bei Empfang der Steuernachricht zu der Mobilkommunikations-Endgerätvorrichtung sendet.

**19.** Kommunikationssystem nach Anspruch 16, wobei
das paketvermittelte Datenkommunikations-Netzwerk eine Basisstation (701, 702, 703) umfasst, die so eingerichtet ist, dass sie einen Kanal mit der Mobilkommunikations-Endgerätvorrichtung einrichtet;
die Basisstation des Weiteren so eingerichtet ist, dass sie eine Auslöse-Nachricht, die eine eindeutige Kennung zur Identifizierung der Basisstation, mit der die Mobilkommunikations-Endgerätvorrichtung zu dieser Zeit den aktuellen Kanal hält, eine eindeutige Kennung zur Identifizierung einer anderen Basisstation, mit der die Mobilkommunikations-Endgerätvorrichtung zu dieser Zeit einen neuen Kanal einrichten wird, und eine geschätzte Zeit enthält, zu der das Ereignis stattfinden wird, zu der Mobilkommunikations-Endgerätvorrichtung überträgt, wenn

eine Anforderung zum Übertragen einer Auslöse-Nachricht von der Mobilkommunikations-Endgerätvorrichtung empfangen wird oder ein Auftreten eines Ereignisses dahingehend erfasst wird, dass sich die Mobilkommunikations-Endgerätvorrichtung aus einem Arbeitsbereich herausbewegt, wobei die Erfassung aufgrund von Überwachung des Standorts der Mobilkommunikations-Endgerätvorrichtung erfolgt;

und die Mobilkommunikations-Endgerätvorrichtung des Weiteren so eingerichtet ist, dass sie zu der Basisstation, mit der der aktuelle Kanal gehalten wird, eine Steuernachricht überträgt, die eine eindeutige Kennung zur Identifizierung der Mobilkommunikations-Endgerätvorrichtung, eine eindeutige Kennung zur Identifizierung der Auslöse-Nachricht sowie einen Zeitrahmen enthält, der für Übertragung der Auslöse-Nachricht vor der geschätzten Zeit des Auftretens des Ereignisses erforderlich ist, und die Mobilkommunikations-Endgerätvorrichtung des Weiteren so eingerichtet ist, dass sie die Basisstation zusätzlich auffordert, bei der Erfassung des Auftretens des Ereignisses die Auslöse-Nachricht zu übertragen.

## Revendications

1. Appareil à terminal de communication mobile (100, 300, 400, 704, 1300) permettant de se déplacer entre des réseaux de communication de données commutées par paquets, l'appareil comprenant :

   une unité d'accès au réseau (101, 301) comportant un mécanisme d'accès au réseau ; et
   une unité de décision à accès multiple (103) adaptée pour décider un canal à utiliser dans une session de communication en échangeant de l'information avec l'unité d'accès au réseau en utilisant un ensemble d'interfaces, et
   pour contrôler l'unité d'accès au réseau associée au canal décidé ;
   **caractérisé en ce que**
   l'unité de décision à accès multiple est en outre adaptée pour notifier à une couche supérieure (102) qu'une session de communication en cours sera réalisée via une autre unité d'accès au réseau.

2. Appareil à terminal de communication mobile selon la revendication 1, dans lequel la notification comprend de l'information indiquant que l'autre unité d'accès au réseau doit être utilisée après que le canal utilisé pour la session de communication en cours est déconnecté.

3. Appareil à terminal de communication mobile selon la revendication 1, dans lequel ledit ensemble d'interfaces utilisé par l'unité de décision à accès multiple comprend une interface de demande, une interface de configuration et une interface de déclenchement ;
   et dans lequel l'interface de demande comprend une section pour l'identification d'un type de demande et une section de résultat de demande, dans lequel l'interface de demande est un signal transmis depuis l'unité de décision à accès multiple vers l'unité d'accès au réseau pour obtenir de l'information concernant l'unité d'accès au réseau ;
   et dans lequel l'interface de configuration comprend une section pour indiquer un paramètre à configurer et une section d'une nouvelle valeur du paramètre, dans lequel le paramètre est un code montrant un signal d'information pour transmettre depuis l'unité d'accès au réseau vers l'unité de décision à accès multiple, et dans lequel la nouvelle valeur du paramètre est utilisée pour transmettre un signal d'un critère pour la génération du signal d'information qui doit être envoyé à l'unité de décision à accès multiple, et dans lequel l'interface de configuration est un signal transmis depuis l'unité de décision à accès multiple vers l'unité d'accès au réseau pour configurer le paramètre associé à l'unité d'accès au réseau ;
   et dans lequel l'interface de déclenchement comprend une section pour identifier de manière unique l'unité d'accès au réseau et un événement qui s'est produit ou est sur le point de se produire, et dans lequel l'interface de déclenchement est un signal transmis depuis l'unité d'accès au réseau vers l'unité de décision à accès multiple pour notifier que l'événement s'est produit ou est sur le point de se produire.

4. Appareil à terminal de communication mobile selon la revendication 1, dans lequel l'unité de décision à accès multiple comprend un dispositif de mémoire non volatile pour enregistrer et stocker de l'information concernant la configuration et l'état de l'unité d'accès au réseau.

5. Appareil à terminal de communication mobile selon la revendication 1, dans lequel ledit ensemble d'interfaces utilisé par l'unité de décision à accès multiple comprend une interface de demande, une interface de configuration et une interface de déclenchement, l'appareil comprenant en outre un traducteur d'interface (305) spécifique à l'unité d'accès au réseau adapté pour permettre un échange d'information entre l'unité d'accès au réseau et l'unité de décision à accès multiple en convertissant chaque format de l'interface de demande, de l'interface de configuration et de l'interface de déclenchement.

**6.** Appareil à terminal de communication mobile selon la revendication 1, dans lequel l'unité d'accès au réseau comprend :

une pluralité de canaux de communication d'unité d'accès au réseau (407) adaptés pour être utilisés simultanément en parallèle ; et
une sous-unité de décision à accès multiple (406) adaptée pour contrôler les canaux de communication de l'unité d'accès au réseau et pour échanger de l'information avec l'unité de décision à accès multiple en utilisant les interfaces.

**7.** Appareil à terminal de communication mobile selon la revendication 6, dans lequel ledit ensemble d'interfaces utilisé par l'unité de décision à accès multiple comprend une interface de demande, une interface de configuration et une interface de déclenchement, l'appareil comprenant en outre un traducteur d'interface (305) spécifique à l'unité d'accès au réseau adapté pour permettre un échange d'information entre la sous-unité de décision à accès multiple et l'unité de décision à accès multiple en convertissant chaque format de l'interface de demande, de l'interface de configuration et de l'interface de déclenchement entre la sous-unité de décision à accès multiple et l'unité de décision à accès multiple.

**8.** Appareil à terminal de communication mobile selon la revendication 1, dans lequel :

ledit ensemble d'interfaces utilisé par l'unité de décision à accès multiple comprend une interface de demande, une interface de configuration et une interface de déclenchement ; et
l'interface de demande est un signal pour communiquer de l'information concernant :

le mode de fonctionnement de l'unité d'accès au réseau ;
le coût d'utilisation d'un canal procuré par l'unité d'accès au réseau ;
la bande passante du canal procuré par l'unité d'accès au réseau ;
la qualité du canal procuré par l'unité d'accès au réseau ;
le niveau de qualité de service pris en charge par le canal procuré par l'unité d'accès au réseau ;
l'information de quantité de puissance consommée pour le canal procuré par l'unité d'accès au réseau ; et
le système de sécurité pris en charge par le canal procuré par l'unité d'accès au réseau.

**9.** Appareil à terminal de communication mobile selon la revendication 1, dans lequel :

ledit ensemble d'interfaces utilisé par l'unité de décision à accès multiple comprend une interface de demande, une interface de configuration et une interface de déclenchement ; et
l'interface de configuration est un signal envoyé à l'unité d'accès au réseau pour communiquer de l'information concernant :

le mode de fonctionnement de l'unité d'accès au réseau ;
le fait d'envoyer un signal d'information depuis l'unité d'accès au réseau vers l'unité de décision à accès multiple ;
le fait de ne pas envoyer un signal d'information depuis l'unité d'accès au réseau vers l'unité de décision à accès multiple ;
un critère pour la génération par l'unité d'accès au réseau du signal d'information qui doit être envoyé à l'unité de décision à accès multiple ;
un critère pour que l'unité d'accès au réseau démarre une opération de transfert intercellulaire ; et
la spécification d'un canal utilisé par l'unité d'accès au réseau.

**10.** Appareil à terminal de communication mobile selon la revendication 1, dans lequel :

ledit ensemble d'interfaces utilisé par l'unité de décision à accès multiple comprend une interface de demande, une
interface de configuration et une interface de déclenchement ; et
l'interface de déclenchement est un signal envoyé depuis l'unité d'accès au réseau vers l'unité de décision à accès multiple pour communiquer de l'information concernant :

un changement d'état de l'unité d'accès au réseau associée à une station de base ; et

le coût d'utilisation d'un canal procuré par l'unité d'accès au réseau lorsqu'une certaine valeur est changée ;

le niveau de qualité de service pris en charge par un canal procuré par l'unité d'accès au réseau lorsqu'une certaine valeur est changée ;

un système de sécurité utilisé dans un canal procuré par l'unité d'accès au réseau qui est changé en un certain type ; et

un système de modulation utilisé dans un canal procuré par l'unité d'accès au réseau.

11. Appareil à terminal de communication mobile selon la revendication 1, comprenant en outre :

une pluralité de filtres de temporisation à prises (502) adaptés pour prédire la déconnexion d'un canal du réseau de communication de données commutées par paquets sur base de signaux d'entrée reçus via le réseau de communication de données ; et

un comparateur (503) adapté pour décider d'envoyer ou non une interface de déclenchement à l'unité de décision à accès multiple en comparant des signaux d'entrée parmi la pluralité de filtres de temporisation à prises dans une série temporelle.

12. Appareil à terminal de communication mobile selon la revendication 11, dans lequel le filtre de temporisation à prises comprend en outre :

une pluralité de registres de temporisation (621) adaptés pour enregistrer les signaux d'entrée pour chaque génération reçue et pour maintenir les signaux d'entrée durant une certaine période ;

une pluralité de multiplicateurs (622) dont chacun est adapté pour multiplier chaque sortie de chaque registre de temporisation par un poids procuré pour chaque registre de temporisation ; et

un additionneur (623) adapté pour additionner une pluralité de valeurs multipliées entrées à partir de la pluralité de multiplicateurs pendant l'ajout d'une valeur de réglage prédéterminée aux valeurs multipliées.

13. Procédé de contrôle d'un appareil à terminal de communication mobile permettant de se déplacer entre des réseaux de communication de données commutées par paquets, où l'appareil à terminal de communication mobile comprend une unité d'accès au réseau ayant un mécanisme d'accès au réseau et une unité de décision à accès multiple, dans lequel le procédé comprend les étapes consistant à :

décider, via l'unité de décision à accès multiple, un canal à utiliser dans une session de communication en échangeant de l'information avec l'unité d'accès au réseau en utilisant un ensemble d'interfaces ; et

contrôler, via l'unité de décision à accès multiple, l'unité d'accès au réseau associée au canal décidé ; **caractérisé en ce que** le procédé comprend en outre les étapes consistant à :

transmettre, depuis l'unité de décision à accès multiple vers l'unité d'accès au réseau, une interface de demande pour obtenir de l'information concernant l'unité d'accès au réseau ;

transmettre, depuis l'unité de décision à accès multiple vers l'unité d'accès au réseau, une interface de configuration pour configurer le paramètre associé à l'unité d'accès au réseau ;

transmettre, depuis l'unité d'accès au réseau vers l'unité de décision à accès multiple, une interface de déclenchement pour notifier qu'un événement s'est produit ou est sur le point de se produire ; et

notifier, par l'unité de décision à accès multiple, à une couche supérieure, qu'une session de communication en cours sera réalisée via une autre unité d'accès au réseau.

14. Procédé pour contrôler l'appareil à terminal de communication mobile selon la revendication 13, comprenant en outre les étapes consistant à :

dans l'unité de décision à accès multiple, contrôler l'unité d'accès au réseau ;

contrôler, via l'unité de décision à accès multiple, la sous-unité de décision à accès multiple pour contrôler une pluralité de canaux de communication d'unité d'accès au réseau qui peuvent être opérés simultanément en parallèle et pour échanger de l'information avec l'unité de décision à accès multiple en utilisant les interfaces ; et

mener, via l'unité de décision à accès multiple, des communications avec soit l'unité d'accès au réseau, soit la sous-unité de décision à accès multiple, en utilisant les interfaces.

15. Procédé pour contrôler l'appareil à terminal de communication mobile selon la revendication 14, comprenant en outre les étapes consistant à :

utiliser, par la sous-unité de décision à accès multiple, une identifiant unique qui désigne la sous-unité de décision à accès multiple elle-même lorsque des communications sont menées avec l'unité de décision à accès multiple ; et

envoyer, par la sous-unité de décision à accès multiple, une décision prise par la sous-unité de décision à accès multiple sur base de l'interface de déclenchement vers le protocole de couche supérieure qui mène des communications avec l'unité d'accès au réseau dans le cas où l'identifiant unique est utilisé dans l'interface de déclenchement.

16. Système de communication dont la constitution comprend des réseaux de communication de données commutées par paquets et l'appareil à terminal de communication mobile selon l'une des revendications 1 à 12 pour se déplacer entre les réseaux de communication de données.

17. Système de communication selon la revendication 16, dans lequel :

les réseaux de communication de données commutées par paquets comprennent une station de base (701, 702, 703) adaptée pour configurer dynamiquement un ensemble de poids au moment de l'établissement d'un canal avec l'appareil à terminal de communication mobile, et adaptée en outre pour procurer l'appareil à terminal de communication mobile avec l'ensemble de poids configuré ; et dans lequel l'appareil à terminal de communication mobile est en outre adapté pour prédire la déconnexion du canal établi avec la station de base en utilisant l'ensemble de poids procuré à partir de la station de base.

18. Système de communication selon la revendication 17, dans lequel l'appareil à terminal de communication mobile transmet à la station de base un message de contrôle contenant une temporisation de transmission d'interface de déclenchement réglée par l'unité de décision à accès multiple via l'unité d'accès au réseau, et la station de base envoie l'ensemble de poids correspondant au message de contrôle à l'appareil à terminal de communication mobile sur réception du message de contrôle.

19. Système de communication selon la revendication 16, dans lequel :

le réseau de communication de données commutées par paquets comprend une station de base (701, 702, 703) adaptée pour établir un canal avec l'appareil à terminal de communication mobile ;
et dans lequel la station de base est en outre adaptée pour transmettre à l'appareil à terminal de communication mobile un message de déclenchement qui contient un identifiant unique pour l'identification de la station de base avec laquelle l'appareil à terminal de communication mobile maintient le canal actuel maintenant, un identifiant unique pour l'identification d'une autre station de base avec laquelle l'appareil à terminal de communication mobile va établir un nouveau canal maintenant, et un temps estimé auquel l'événement se produira, lors de la réception d'une demande de transmission de message de déclenchement provenant de l'appareil à terminal de communication mobile, ou lors de la détection de l'occurrence d'un événement consistant en ce que l'appareil à terminal de communication mobile sort de la zone de fonctionnement, où la détection est effectuée en surveillant la position de l'appareil à terminal de communication mobile ;
et dans lequel l'appareil à terminal de communication mobile est en outre adapté pour transmettre, à la station de base avec laquelle le canal actuel est maintenu, un message de contrôle contenant un identifiant unique pour l'identification de l'appareil à terminal de communication mobile, un identifiant unique pour l'identification du message de déclenchement, et une période nécessaire pour la transmission du message de déclenchement avant le temps estimé de l'occurrence de l'événement, et dans lequel l'appareil à terminal de communication mobile est en outre adapté pour demander en outre à la station de base de transmettre le message de déclenchement sur détection de l'occurrence de l'événement.

**FIG.1**

EP 1 804 398 B1

T1000: NAU 101-A IS
ACTIVE

T5000: NAU 101-B IS
ACTIVE

T3000:
PREPARATION
FOR
ACTIVATION OF
NAU 101-B

TIME

T2000: NAU 101
PREDICTS A
CONNECTION LOSS OF
CHANNEL  AND SENDS
A TRIGGER INTERFACE

T4000: CONNECTION
LOSS IN CHANNEL
PROVIDED BY NAU
101-A OCCURS

FIG.2

FIG.3

FIG.4

FIG.5

FIG.6

EP 1 804 398 B1

FIG.7

502 : TDF

INPUT
SIGNAL

621 $Z^{-1}$

621 $Z^{-1}$

621 $Z^{-1}$

622 W[1]

622 W[2]

622 W[M]

623 Σ

W[0]

OUTPUT TO
COMPARATOR

701 : BASE STATION

703 : BASE STATION

704

OPERATION AREA OF
BASE STATION 701

OPERATION AREA OF
BASE STATION 703

OPERATION AREA OF
BASE STATION 702

702 : BASE STATION

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6504839 B
- US 6469998 B
- US 6473413 B
- US 5913168 A
- EP 0980190 B1
- WO 02076131 A1
- EP 1385351 A1

### Non-patent literature cited in the description

- **PERKINS, C. E.** IP Mobility Support. *IETF RCF 3344,* August 2002
- **JOHNSON, D.B. ; PERKINS, C. E. ; ARKKO, J.** Mobility Support in IPv6. *Work In Progress,* February 2003, draft-ietf-mobileip-ipv6-21.txt
- **HAYKIN, S.** Adaptive Filter Theory. Prentice-Hall, 1996
- **KALMAN, R.E.** A New Approach to Linear Filtering and Prediction Problems. *Trans. ASME,* March 1960, vol. 82, 35-45
- **HAYKIN, S.** Neural Network: A Comprehensive Foundation. Prentice Hall, 1994